(19) Europäisches Patentamt
European Patent Office
Office européen des brevets

(11) EP 0 548 795 B1

(12) EUROPÄISCHE PATENTSCHRIFT

(45) Veröffentlichungstag und Bekanntmachung des Hinweises auf die Patenterteilung:
**09.07.1997 Patentblatt 1997/28**

(51) Int Cl.[6]: **C09B 62/503**

(21) Anmeldenummer: **92121462.3**

(22) Anmeldetag: **17.12.1992**

(54) **Wasserlösliche faserreaktive Farbstoffe, Verfahren zu ihrer Herstellung und ihre Verwendung**

Water-soluble reactive dyes, their manufacture and their use

Colorants réactif solubles, procédé de préparation et leur utilisation

(84) Benannte Vertragsstaaten:
**BE CH DE ES FR GB IT LI NL PT**

(30) Priorität: **20.12.1991 DE 4142420**
**15.02.1992 DE 4204599**
**21.02.1992 DE 4205326**

(43) Veröffentlichungstag der Anmeldung:
**30.06.1993 Patentblatt 1993/26**

(73) Patentinhaber: **HOECHST AKTIENGESELLSCHAFT**
**65926 Frankfurt am Main (DE)**

(72) Erfinder:
- **Dannheim, Jöärg, Dr.**
  **W-6000 Frankfurt/M (DE)**
- **Russ, Werner Hubert, Dr.**
  **W-6093 Flörsheim/M (DE)**

(56) Entgegenhaltungen:
**EP-A- 0 218 131** **EP-A- 0 282 443**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 548 795 B1

Printed by Jouve, 75001 PARIS (FR)

**Beschreibung**

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen faserreaktvien Farbstoffen, die verbesserte Eigenschaften, insbesondere in anwendungstechnischer Sicht, aufweisen. Desweiteren werden in zunehmendem Maße Farbstoffe verlangt, die in hoher Qualität einwandfrei weiß und bunt ätzbar sind und sich somit sehr gut sowohl für den Ätzdruck als auch für den Reservedruck eignen. Triazinhaltige Farbstoffe gelten bisher als nicht ätzbar; denn nach dem Ätzen blieben Farbstoffbruchstücke zurück, die zu einer bräunlich-gelben Verfärbung der Textilien führten.

Hingewiesen wird in diesem Zusammenhang auf die EP-A-0 218 131. In dieser Vorveröffentlichung sind u.a. Farbstoffe vom Vinyl sulfon typ beschrieben, die eine Triazingruppe enthalten, die einerseits den Chromophor trägt und zum anderen durch zwei nicht-farbige, unter Färbebedingungen stabile Reste substituiert ist.

Mit der vorliegenden Erfindung wurden nunmehr neue, wertvolle faserreaktive Farbstoffe der nachstehend angegebenen und definierten allgemeinen Formel (1) gefunden, die sehr gute anwendungstechnische Eigenschaften besitzen und sich darüber hinaus auch sehr gut für den Ätz- und Reservedruck eignen, weswegen sie sich in breiterem Anwendungsumfang zum Färben von Fasermaterialien einsetzen lassen. Beim Ätzdruck wird auf eine gefärbte Stoffbahn (Fond) in einem gewünschten Muster ein Ätzmittel aufgedruckt; das Ätzmittel zerstört den Farbstoff, sofern dieser ätzbar ist, so daß nach Fertigstellung des Ätzverfahrens ein weißes Muster auf der Färbung erscheint (Weißätze). Enthält die aufgedruckte Ätze zusätzlich einen ätzestabilen Farbstoff, so erhält man nach Fertigstellung des Ätzvorgangs und üblicher Behandlung zur Fixierung dieses beigegebenen Farbstoffes auf dem Fond ein Druckmuster in einem anderen Farbton (Buntätze).

Bei dem Reservedruck wird zunächst das Gewebe mit einem geeigneten Reservierungsmittel in einem gewünschten Muster bedruckt. Das so vorbedruckte Gewebe wird anschließend mit einem Farbstoff, der sich mit dem Reservierungsmittel zu verbinden vermag und somit nicht mehr in der Lage ist, auf dem Gewebe zu fixieren, überfärbt (überklotzt oder überdruckt) mit der Folge, daß an den reservierten Stellen keine Farbstoffixierung eintritt und somit die erhaltene Färbung ein weißes Muster gemäß dem Muster des Reservierungsmittels besitzt.

Die neuen, erfindungsgemäßen Farbstoffe besitzen die allgemeinen Formel (1)

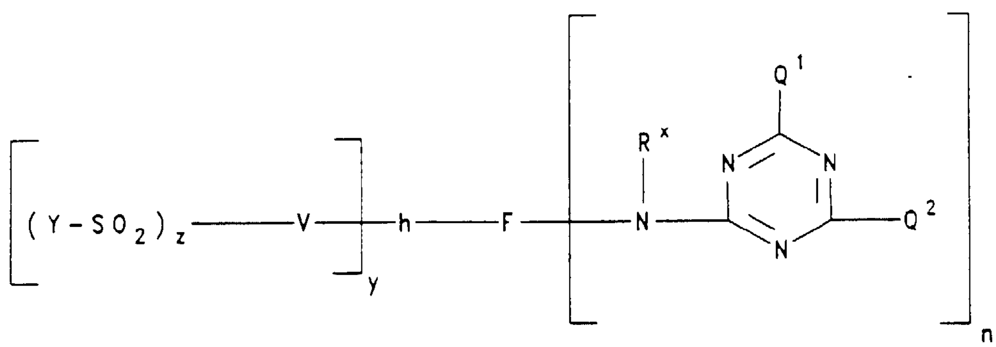

(1)

in welcher bedeuten:

- F ist der Rest eines Monoazo-, Disazo- oder Polyazofarbstoffes oder eines davon abgeleiteten Schwermetallkomplex-Azofarbstoffes oder eines Anthrachinon-, Phthalocyanin-, Formazan-, Azomethin-, Dioxazin-, Phenazin-, Stilben-, Triphenylmethan-, Xanthen-, Thioxanthen-, Nitroaryl-, Naphthochinon-, Pyrenchinon- oder Perlyentetracarbimid-Farbstoffes;
- $R^x$ ist ein Wasserstoffatom oder eine Alkylgruppe von 1 bis 4 C-Atomen, wie die Methyl- oder Ethylgruppe, die durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, Carboxy, Sulfamoyl, Sulfo oder Sulfato substituiert sein kann, bevorzugt die Methyl- oder Ethylgruppe und insbesondere ein Wasserstoffatom;
- n ist die Zahl 1 oder 2, bevorzugt 1;
- V ist eine direkte Bindung oder eine Alkylengruppe oder ist ein gegebenenfalls substituierter Arylenrest oder ein Alkylen-arylen- oder Arylen-alkylen- oder Alkylen-arylen-alkylen- oder Arylen-alkylen-arylen-Rest oder ein durch eine Heterogruppe, wie bspw. eine der nachstehend genannten, unterbrochener Arylen-arylen-Rest, wobei die Alkylenreste solche von 1 bis 8 C-Atomen, vorzugsweise von 2 bis 6, insbesondere von 2 bis 4 C-Atomen, sind und substituiert sein können, beispielsweise durch Sulfo, Carboxy, Sulfato und/oder Phosphato, und die Arylenreste gegebenenfalls substituierte Phenylen- oder Naphthylenreste sind, und wobei die Alkylenreste durch 1 oder mehrere, wie 2 oder 3, Heterogruppen, wie -NH- , -N(R)- mit R gleich Alkyl von 1 bis 4 C-Atomen, das durch Sulfo, Carboxy, Sulfato, Phenyl oder Sulfophenyl substituiert sein kann, -O-, -S- , $-SO_2-$ , -CO- , $-SO_2-NH-$ , $-NH-SO_2-$, -NH-CO- und -CO-NH- , unterbrochen sein können und die Alkylen- und Arylenanteile in den kombinierten Alkylen/Arylen-Resten jeweils durch eine Heterogruppe, wie bspw. eine der obengenannten, voneinander getrennt sein können;

y ist die Zahl 1 oder 2;

z ist die Zahl 1 oder 2;

h ist im Falle von y gleich 2 ein N-Atom oder im Falle von y gleich 1 eine Gruppe der Formel -NH- , -N(R)- mit R einer der obengenannten Bedeutungen, -NH-CO-NH-, -NH-CO- oder -CO-NH- oder bevorzugt eine direkte Bindung;

Y ist die Vinylgruppe oder ist eine Ethylgruppe, die in β-Stellung einen alkalisch eliminierbaren Substituenten enthält, wie die β-Sulfatoethyl-, β-Thiosulfatoethyl- oder β-Phosphatoethyl-Gruppe oder eine β-Alkanoyloxyethyl-Gruppe mit 2 bis 5 C-Atomen im Alkanoylrest, wie die β-Acetyloxyethyl-Gruppe, oder die β-Benzoyloxy-ethyl-, β-(Sulfobenzoyloxy)-ethyl- oder die β-(p-Toluolsulfonyloxy)-ethyl-Gruppe oder eine β-Halogenethyl-Gruppe, wie die β-Bromethyl- oder β-Chlorethyl-Gruppe, und ist bevorzugt die Vinylgruppe und insbesondere die β-Sulfatoethyl-Gruppe,

wobei die Gruppe(n) $-SO_2-Y$ direkt oder über einen Alkylenrest von 1 bis 4 C-Atomen, wie die Methylengruppe, oder über eine Alkylaminogruppe von 1 bis 4 C-Atomen, wie die Methylamino- oder Ethylaminogruppe, an ein aromatisches Kohlenstoffatom von F oder V gebunden sein kann (können);

$Q^1$ und $Q^2$ sind beide mit zueinander gleicher oder voneinander verschiedener Bedeutung jedes Alkyl von 1 bis 4 C-Atomen, insbesondere Methyl, das durch 1 oder 2 Alkanoylgruppen von 2 bis 5 C-Atomen, wie Acetyl, oder durch 1 oder 2 Alkoxycarbonylgruppen von 2 bis 5 C-Atomen, wie Methoxycarbonyl oder Ethoxycarbonyl, oder durch eine dieser Alkoxycarbonyl- und eine dieser Alkanoylgruppen substituiert ist, oder eine Gruppe der allgemeinen Formel (2A)

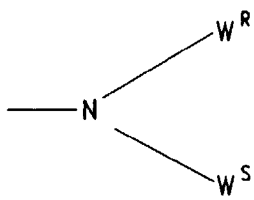
(2A)

in welcher

$W^R$ Wasserstoff oder Alkyl von 1 bis 4 C-Atomen ist, wie Ethyl oder Methyl, oder Alkyl von 1 bis 4 C-Atomen ist, das durch Sulfo, Carboxy, Phosphato, Sulfato, Hydroxy, Cyano, Alkoxy von 1 bis 4 C-Atomen, wie Methoxy und Ethoxy, Phenyl oder durch Substituenten aus der Gruppe Sulfo, Carboxy, Alkyl von 1 bis 4 C-Atomen, Alkoxy von 1 bis 4 C-Atomen, Chlor und Nitro substituiertes Phenyl substituiert ist, oder Cycloalkyl von 5 bis 8 C-Atomen, wie Cyclopentyl, Cyclohexyl oder Dimethylcyclohexyl, ist,

$W^S$ Wasserstoff, Alkyl von 1 bis 4 C-Atomen, wie Ethyl und Methyl, oder Alkyl von 1 bis 4 C-Atomen, das durch Sulfo, Carboxy, Phosphato, Sulfato, Hydroxy, Cyano, Alkoxy von 1 bis 4 C-Atomen, wie Methoxy und Ethoxy, Phenyl oder durch Substituenten aus der Gruppe Sulfo, Carboxy, Alkyl von 1 bis 4 C-Atomen, Alkoxy von 1 bis 4 C-Atomen, Chlor und Nitro substituiertes Phenyl substituiert ist, oder Phenyl ist, das durch 1, 2 oder 3 Substituenten aus der Gruppe Alkyl von 1 bis 4 C-Atomen, wie Ethyl und insbesondere Methyl, Alkoxy von 1 bis 4 C-Atomen, wie Ethoxy und insbesondere Methoxy, Chlor, Sulfo, Carboxy und Nitro substituiert sein kann, oder

$W^R$ und $W^S$ zusammen mit dem N-Atom einen aus einem Alkylenrest von 3 bis 8 C-Atomen, bevorzugt 4 bis 6 C-Atomen, oder einen aus einer weiteren Heterogruppe, wie einem Stickstoffatom, einem Sauerstoffatom oder einer Gruppe -NH- , und zwei Alkylenresten von 1 bis 4 C-Atomen aufgebauten heterocyclischen Rest, wie beispielsweise den N-Piperazino-, N-Piperidino- oder N-Morpholinorest, bilden.

Bevorzugt ist F der Rest eines Mono- oder Disazofarbstoffes oder der Rest eines Metallkomplex-Azofarbstoffes, wie eines o,o'-1:1-Kupferkomplex-Monoazo- oder -Disazofarbstoffes, oder eines Triphendioxazin-, eines Anthrachinon- oder eines Phthalocyaninfarbstoffes, wie eines Kupferphthalocyaninfarbstoffes.

Der Rest F kann in seinem Grundgerüst die bei organischen Farbstoffen üblichen Substituenten enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Acylaminogruppen von 2 bis 8 C-Atomen, wie die Acetylamino-, Propionylamino- oder Benzoylaminogruppe; primäre und mono- oder disubstituierte Aminogruppen, wobei die Substituenten beispielsweise Alkylgruppen von 1 bis 4 C-Atomen und/oder Phenylgruppen sind, wie Monoalkylamino- und Dialkylaminogruppen mit 1 bis 4 C-Atomen im Alkylrest, Phenylamino- oder N-($C_1$-$C_4$-Alkyl)-N-phenyl-amino-Gruppen, wobei die Alkylreste noch substituiert sein können, beispielsweise durch Phenyl, Sulfophenyl, Hydroxy, Sulfato, Sulfo und Carboxy, und die Phenylgruppen noch substituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di-(β-hydroxyethyl)-amino-, N,N-Di-(β-sulfatoethyl)-amino-, Sulfobenzylamino-, N,N-Di-(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkyl-sulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methyl-sulfamoyl, N-Ethyl-sulfamoyl, N-Propyl-sulfamoyl, N-Isopropyl-sulfamoyl, N-Butyl-sulfamoyl, N-(β-Hydroxyethyl)-sulfamoyl und N,N-Di-(β-hydroxyethyl)-sulfamoyl; N-Phenyl-sulfamoyl-, Ureido-, Hydroxy-, Carboxy-, Sulfomethyl- und Sulfogruppen.

Vorzugsweise ist der Farbstoffrest F durch eine oder mehrere, wie 2 bis 6, Sulfogruppen substituiert; gegebenenfalls weitere Substituenten sind bevorzugt solche aus der Gruppe Methyl, Ethyl, Methoxy, Ethoxy, Alkanoylamino von 2 bis 5 C-Atomen, wie Acetylamino, Benzoylamino, Amino, Chlor, Brom, Ureido, Hydroxy, Carboxy und Sulfomethyl.

Wasserlöslich-machende Gruppen sind beispielsweise die Carboxy-, Sulfo-, Sulfato-, Phosphato-, Phosphono- und Phosphinogruppe.

In allen Formeln können die einzelnen Formelglieder, sowohl verschiedener als auch gleicher Bezeichnung innerhalb einer allgemeinen Formel, im Rahmen ihrer Bedeutung zueinander gleiche und voneinander verschiedene Bedeutungen haben.

Die Gruppen "Sulfo", "Carboxy", "Phosphato", "Phosphono", "Phosphino", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$ , Carboxygruppen Gruppen entsprechend der allgemeinen Formel -COOM, Phosphatogruppen Gruppen entsprechend der allgemeinen Formel $-OPO_3M_2$ , Phosphonogruppen Gruppen entsprechend der allgemeinen Formel $-OPO_2M_2$ , Phosphinogruppen Gruppen entsprechend der allgemeinen Formel $-PO_2M_2$ , Thiosulfatogruppen Gruppen entsprechend der allgemeinen Formel $-S-SO_3M$ und Sulfatogruppen Gruppen entsprechend der allgemeinen Formel $-OSO_3M$ ,
in welchen

M ein Wasserstoffatom oder eine salzbildendes Metallatom, wie ein Alkalimetall, wie Natrium, Kalium oder Lithium, ist.

Formelreste $R^x$ sind beispielsweise: Wasserstoff, Methyl, Ethyl, Propyl, Isopropyl, Butyl, Isobutyl, sek.-Butyl, tert.-Butyl, Carboxymethyl, β-Carboxyethyl, β-Carboxypropyl, Methoxycarbonylmethyl, Ethoxycarbonylmethyl, β-Methoxyethyl, β-Ethoxyethyl, β-Methoxypropyl, β-Chlorethyl, γ-Brompropyl, β-Hydroxyethyl, β-Hydroxybutyl, β-Cyanoethyl, Sulfomethyl, β-Sulfoethyl, Amidosulfonylmethyl und β-Sulfatoethyl.

In den Resten V sind Arylenreste bzw. Arylreste bevorzugt Phenylen- und Naphthylenreste bzw. Phenyl- und Naphthylreste, die einen oder mehrere, wie 2 oder 3, bevorzugt 1 oder 2, Substituenten enthalten können, die beispielsweise der Gruppe der Substituenten Alkyl von 1 bis 4 C-Atomen, wie Methyl und Ethyl, Halogen, wie Fluor, Chlor und Brom, Hydroxy, Cyano, Alkoxy von 1 bis 4 C-Atomen, wie Methoxy und Ethoxy, Sulfamoyl, Trifluormethyl und Alkoxycarbonyl von 2 bis 5 C-Atomen, wie Methoxycarbonyl und Ethoxycarbonyl, und erforderlichenfalls der Gruppe der wasserlöslichmachenden Substituenten angehören. Bevorzugt ist hiervon W ein Phenylen- bzw. Phenylrest, die durch die oben angegebenen Substituenten substituiert sein können, wobei die Substituenten aus der Gruppe Alkyl von 1 bis 4 C-Atomen, Chlor, Alkoxy von 1 bis 4 C-Atomen, Carboxy und Sulfo bevorzugt sind.

Reste $Q^1$ bzw. $Q^2$ sind beispielsweise: Amino, Methylamino, Ethylamino, Propylamino, (β-Methoxyethyl)-amino, Phenylamino, Benzylamino, Dimethylamino, Diethylamino, N-Morpholino, N-Piperazino, N-Piperidino, Hydroxylamino,

Bis-(β-hydroxyethyl)-amino, Bis-(β-sulfatoethyl)-amino, 2-Sulfo-ethylamino, N-Methyl-2-sulfoethylamino, 2-Hydroxy-ethylamino, 2-Sulfo-phenylamino, 3-Sulfo-phenylamino, 4-Sulfo-phenylamino, 2-Carboxy-phenylamino, 3-Carboxy-phenylamino, 4-Carboxy-phenylamino, 3,5-Disulfo-phenylamino, 2-Methyl-5-sulfo-phenylamino, 2-Methyl-4-sulfo-phenylamino, 2,4-Disulfo-phenylamino, 3,4-Dicarboxy-phenylamino, 2,5-Dicarboxy-phenylamino, 3,5-Dicarboxy-phenylamino, 2-Carboxy-ethylamino, 4-Carboxy-butylamino, 1-Carboxy-2-methyl-n-propyl-1-amino, 1-Carboxy-3-methyl-n-butyl-1-amino, 1-Carboxy-ethyl-1-amino, Methoxycarbonyl-methyl, Ethoxycarbonyl-methyl, Acetyl-methyl, 1-Acetyl-1-ethoxycarbonyl-methyl und Di-acetyl-methyl.

Der Formelrest V ist bevorzugt eine direkte Bindung. Ist V ein Arylenrest, so ist er bevorzugt ein gegebenenfalls sulfosubstituierter Naphthylenrest oder ein Phenylenrest, der durch 1 oder 2 Substituenten aus der Alkyl von 1 bis 4 C-Atomen, Alkoxy von 1 bis 4 C-Atomen, Halogen, wie Chlor und Brom, Alkylsulfonyl von 1 bis 4 C-Atomen, Sulfo, Carboxy und Trifluormethyl substituiert sein kann.

Ist V ein Alkylenrest, so ist dieser bevorzugt ein Alkylenrest von 2 bis 6 C-Atomen, der gegebenenfalls durch eine oder mehrere der obengenannten Heterogruppen unterbrochen und durch einen oder mehrere der genannten Substituenten substituiert sein kann.

Bevorzugte Reste -V-h- sind: 1,4-Phenylen, 1,3-Phenylen, 1,4-Phenylen-amino, 1,3-Phenylen-amino, 2-Methyl-5-methoxy -1,4-phenylen-4-amino, 4-Chlor-1,3-phenylen-3-amino, 4-Hydroxy-1,3-phenylen-3-amino, 4-Methoxy-1,3-phenylen-3-amino, 2,5-Dimethoxy-1,4-phenylen-4-amino, 4-Carboxy-1,3-phenylen-3-amino und Reste der Formeln

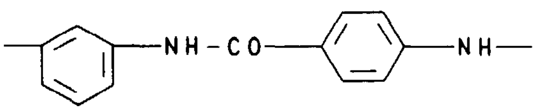 , 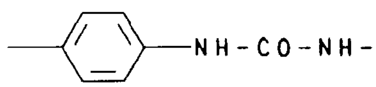 ,

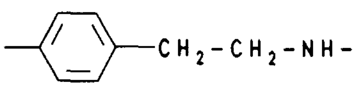 , $-(CH_2)_3-NH-$ , $-(CH_2)_3-NH-CO-$ ,

$-(CH_2)_3-NH-CO-NH-$ und 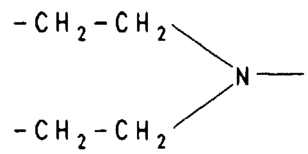 .

Bevorzugt sind insbesondere auch Farbstoffe, in welchen y gleich 1 ist und V und h beide eine direkte Bindung bedeuten.

Die an den Farbstoffrest F gebundene Gruppierung der Formel (3)

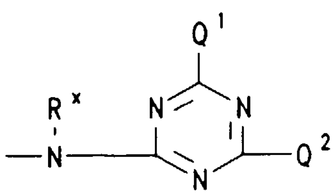 (3)

ist bevorzugt ein Rest der allgemeinen Formel (3a)

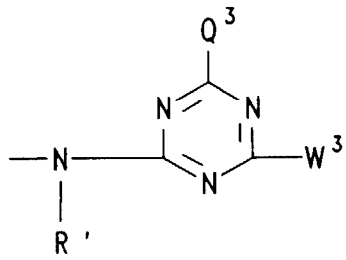

(3a)

in welcher

R' Methyl oder Ethyl oder bevorzugt Wasserstoff ist,
$Q^3$ eine Aminogruppe der allgemeinen Formel $-NT^1T^2$ ist, in welcher

$T^1$ Wasserstoff oder Alkyl von 1 bis 4 C-Atomen ist, das durch Hydroxy, Alkoxy von 1 bis 4 C-Atomen, wie Ethoxy und Methoxy, Sulfo, Carboxy, Sulfato, Phosphato, Phenyl und sulfosubstituiertes Phenyl substituiert sein kann, und
$T^2$ Wasserstoff oder Alkyl von 1 bis 4 C-Atomen ist, das durch Hydroxy, Alkoxy von 1 bis 4 C-Atomen, wie Ethoxy und Methoxy, Sulfo, Carboxy, Sulfato, Phosphato, Phenyl und sulfosubstituiertes Phenyl substituiert sein kann, oder Phenyl ist, das durch 1 oder 2

Substituenten aus der Gruppe Alkoxy von 1 bis 4 C-Atomen, wie Methoxy und Ethoxy, Alkyl von 1 bis 4 C-Atomen, wie Methyl und
Ethyl, Sulfo und Carboxy substituiert sein kann, Und

$W^3$ eine Aminogruppe der allgemeinen Formel $-NT^3T^4$ ist, in welcher

$T^3$ Wasserstoff oder Alkyl von 1 bis 4 C-Atomen ist, das durch Hydroxy, Alkoxy von 1 bis 4 C-Atomen, wie Ethoxy und Methoxy, Sulfo, Carboxy, Sulfato, Phosphato, Phenyl und sulfosubstituiertes Phenyl substituiert sein kann, und
$T^4$ Wasserstoff oder Alkyl von 1 bis 4 C-Atomen ist, das durch Hydroxy, Alkoxy von 1 bis 4 C-Atomen, wie Ethoxy und Methoxy, Sulfo, Carboxy, Sulfato, Phosphato, Phenyl und sulfosubstituiertes Phenyl substituiert sein kann, oder Phenyl ist, das durch 1 oder 2 Substituenten aus der Gruppe Alkoxy von 1 bis 4 C-Atomen, wie Methoxy und Ethoxy, Alkyl von 1 bis 4 C-Atomen, wie Methyl und Ethyl, Sulfo und Carboxy substituiert sein kann.

Wichtige Azofarbstoffe entsprechend der allgemeinen Formel (1) sind solche, in denen F einen Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalin-azo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Von den erfindungsgemäßen 1:1-Kupferkomplex-Azofarbstoffen sind diejenigen der Benzol- und Naphthalinreihe bevorzugt.

Bevorzugte Mono- und Disazofarbstoffe der allgemeinen Formel (1) sind beispielsweise solche der allgemeinen Formeln (4a) und (4b)

$$R^G - D_1 - N = N - (E - N = N)_v - K - Z \qquad (4a)$$

$$Z - D_2 - N = N - (E - N = N)_v - K - R^G \qquad (4b)$$

und die davon abgeleiteten Schwermetallkomplex-Verbindungen, wie 1:1-Kupferkomplex-Verbindungen,
in welchen

$D_1$ der Rest einer Diazokomponente der Benzol- oder Naphthalinreihe ist,

$D_2$ der Rest einer Diazokomponente der Diaminobenzol- oder Diaminonaphthalin-Reihe ist,

E der Rest einer Mittelkomponente der Benzol- oder Naphthalinreihe bedeutet,

K der Rest einer Kupplungskomponente der Benzol-, Naphthalin-, Pyrazolon-, 6-Hydroxypyridon(2)- oder Acetessigsäurearylamid-Reihe ist,

wobei $D_1$, E und K für Azofarbstoffe übliche Substitutenten, wie beispielsweise Hydroxy-, Amino-, Methyl-, Methoxy-, Ethoxy-, Sulfo-, Carboxy-, gegebenenfalls substituierte Alkanoylaminogruppen von 2 bis 4 C-Atomen im Alkanoylrest, Ureido-, ($C_1$-$C_4$)-Alkylureido-, Phenylureido-, gegebenenfalls substituierte Benzoylaminogruppen und Halogenatome, wie Brom- und Chloratome, enthalten können und $D_1$, E und K zusammen mindestens zwei Sulfogruppen, vorzugsweise drei oder vier Sulfogruppen, besitzen,

v für die Zahl Null oder 1 steht,

Z eine Gruppe der Formel (3) oder bevorzugt der Formel (3a) oder (3b) ist und

$R^G$ eine Gruppe der allgemeinen Formel (5)

$$\left[ (Y - SO_2)_z - V \right]_y - h - \qquad (5)$$

mit Y, V, h, z und y der obengenannten Bedeutung ist.

Bevorzugt sind weiterhin Disazofarbstoffe der allgemeinen Formel (4c) oder (4d)

$$R^G - D_1 - N = N - K^\circ - N = N - D_2 - Z \qquad (4c)$$

$$Z - D_2 - N = N - K^\circ - N = N - D_1 - R^G \qquad (4d)$$

in welchen $R^G$ die obengenannte Bedeutung besitzt, $D_1$ und $D_2$ unabhängig voneinander den Rest einer Diazokomponente der Benzol- oder Naphthalinreihe und K° den Rest einer bivalenten Kupplungskomponente der Naphthalinreihe darstellt, wobei $D_1$, $D_2$ und K° die für Azofarbstoffe üblichen Substituenten, wie die oben bereits erwähnten, tragen können, wobei $D_1$, $D_2$ und K° zusammen mindestens zwei, wie 2 bis 5, wasserlöslich-machende Gruppen, vorzugsweise Carboxy-, Sulfo- und Sulfatogruppen, enthalten.

Solche Azofarbstoffe der allgemeinen Formel (1) sind insbesondere Farbstoffe der allgemeinen Formeln (4e), (4f) und (4g)

$$R^G - \left[ D - N = N - (E - N = N)_v - K \right] - Z_n \qquad (4e)$$

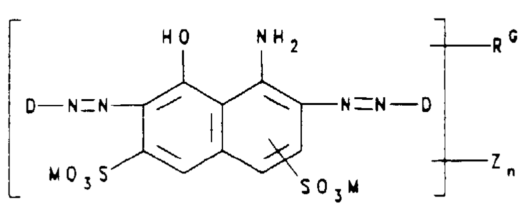

(4f)

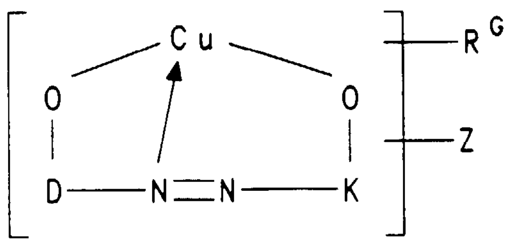

(4g)

in welchen

$R^G$ eine der obigen Bedeutungen besitzt und an D oder K gebunden ist,
Z einen Rest der allgemeinen Formel (3) oder (3a) oder (3b) bedeutet,
n die Zahl 1 oder 2, bevorzugt 1, ist,

der Rest Z an den Rest D oder den Rest K oder im Falle von n = 2 jeweils an D und K bzw. an beide D gebunden ist, wobei $R^G$ und Z bevorzugt nicht gleichzeitig an D und K gebunden sind,

D der Rest einer Diazokomponente ist, an die noch ein Azorest gebunden sein kann, wobei in Formel (4f) beide D zueinander gleiche oder voneinander verschiedene Bedeutungen besitzen können, und beispielsweise einen Rest $D_1$ obiger oder nachstehender Bedeutung darstellt,
E den bivalenten Rest einer kupplungsfähigen und diazotierbaren Verbindung, beispielsweise obiger oder nachstehender Bedeutung, bedeutet,
K den Rest einer Kupplungskomponente, an die noch ein Azorest gebunden sein kann, darstellt, beispielsweise obiger oder nachstehender Bedeutung,
v für die Zahl Null oder 1 steht und
M ein Wasserstoffatom oder ein Alkalimetall, wie Natrium, Kalium oder Lithium, ist.

Von den erfindungsgemäßen Azofarbstoffen der allgemeinen Formel (4e) sind insbesondere diejenigen der allgemeinen Formel (4h)

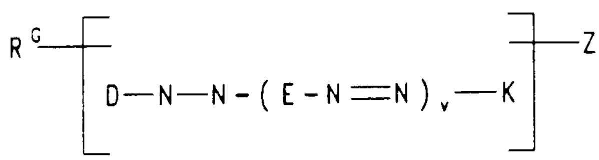

(4h)

hervorzuheben, in welcher

$R^G$ an D oder K gebunden ist und Z alternativ hierzu an K oder D gebunden ist,
$R^G$ eine Gruppe der allgemeinen Formel (5A)

$$(Y - SO_2)_z— \quad (5A)$$

mit Y und z der obengenannten, insbesondere bevorzugten Bedeutung ist und
Z, D, E, K und v eine der obengenannten, insbesondere bevorzugten Bedeutungen besitzen.

Bevorzugte erfindungsgemäße Metallkomplex-Azofarbstoffe sind beispielsweise Kupferkomplex-Azofarbstoffe der allgemeinen Formel (4j)

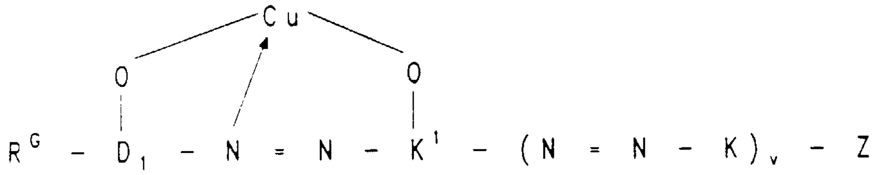

(4j)

in welcher $D_1$, $R^G$, K, v und Z eine der obengenannten Bedeutungen haben und $D_1$ bevorzugt ein nachstehend aus der Formel (5c) oder (5d) ersichtlicher Rest ist und $K^1$ den Rest einer ursprünglich amino- und hydroxygruppenhaltigen Kupplungskomponente bedeutet, wie bevorzugt der Rest eines gegebenenfalls durch 1 oder 2 Sulfogruppen substituierten Aminonaphthols ist, und wobei die beiden das Kupfer komplex bindenden Oxigruppen in ortho-Stellung bzw. vicinaler Stellung zur Azogruppe an $D_1$ und $K^1$ gebunden sind.

Aromatische Reste von Diazokomponenten, die eine faserreaktive Gruppe der Formel Y-$SO_2$- tragen, wie von solchen der Formeln $R^G$-D-$NH_2$ bzw. $R^G$-$D_1$-$NH_2$, sind beispielsweise solche der allgemeinen Formel (5a), (5b), (5c) und (5d)

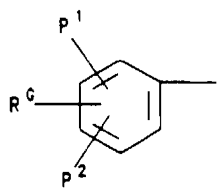

(5a)

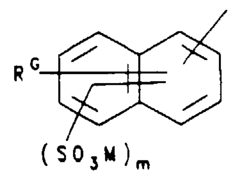

(5b)

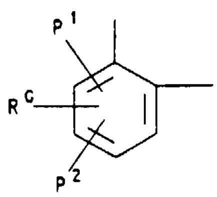

(5c)

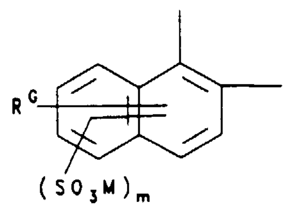

(5d)

in welchen

- $R^G$ einen Rest der Formel (5) bedeutet,
- $P^1$ Wasserstoff, Methyl, Ethyl, Methoxy, Ethoxy, Alkanoyl von 2 bis 5 C-Atomen, wie Acetyl und Propionyl, Cyano, Carboxy, Sulfo, Alkoxycarbonyl von 2 bis 5 C-Atomen, wie Methoxycarbonyl und Ethoxycarbonyl, Carbamoyl, N-($C_1$-$C_4$-Alkyl)-carbamoyl, Fluor, Chlor, Brom oder Trifluormethyl ist,
- $P^2$ Wasserstoff, Methyl, Ethyl, Methoxy, Ethoxy, Cyan, Carboxy, Sulfo, Alkanoylamino von 2 bis 5 C-Atomen, wie Acetylamino, Alkoxycarbonyl von 2 bis 5 C-Atomen, wie Methoxycarbonyl und Ethoxycarbonyl, Carbamoyl, N-($C_1$-$C_4$-Alkyl)-sulfamoyl, Alkylsulfonyl von 1 bis 4 C-Atomen, Phenylsulfonyl oder Phenoxy ist,

wobei der Benzolkern in Formel (5a) und (5b) zusätzlich in ortho-Stellung zur freien Bindung, die an die Azogruppe führt, eine Hydroxygruppe enthalten kann,

- m die Zahl Null, 1 oder 2 bedeutet (wobei diese Gruppe im Falle von m gleich Null ein Wasserstoffatom bedeutet) und
- M die obengenannte Bedeutung hat.

Bevorzugt ist hiervon $P^1$ gleich Wasserstoff, Methyl, Methoxy, Brom, Chlor, Carboxy und Sulfo sowie $P^2$ gleich Wasserstoff, Methyl, Methoxy, Chlor, Carboxy, Sulfo und Acetylamino.

Gruppen der allgemeinen Formel (5a) und (5b) sind beispielsweise:

2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-3-(sulfatoethylsulfonyl)-phenyl, 2-Chlor-4-(β-sulfatoethylsulfonyl)-phenyl, 2-Ethoxy-4- oder -5-(β-sulfatoethylsulfonyl)-phenyl, 2-Ethyl-4-(β-sulfatoethylsulfonyl)-phenyl, 2-Methoxy-5- oder -4-(β-sulfatoethylsulfonyl)-phenyl, 2,4-Diethoxy-5-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2-

oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2-Sulfo-4-vinylsulfonyl-phenyl, 2-Hydroxy-4- oder -5-(β-sulfatoethylsulfonyl)-phenyl, 2-Chlor-4- oder -5-(β-chlorethylsulfonyl)-phenyl, 2-Hydroxy-3-sulfo-5-(β-sulfatoethylsulfonyl)-phenyl, 3- oder 4-(β-Acetoxyethylsulfonyl)-phenyl, 5-(β-Sulfatoethylsulfonyl)-naphth-2-yl, 6- oder 7- oder 8-(β-Sulfatoethylsulfonyl)-naphth-2-yl, 6-(β-Sulfatoethylsulfonyl)-1-sulfo-naphth-2-yl, 5-(β-Sulfatoethylsulfonyl)-1-sulfonaphth-2-yl, 8-(β-Sulfatoethylsulfonyl)-6-sulfo-naphth-2-yl, 3- oder 4-{β-[4-(β'-Sulfatoethylsulfonyl)-phen]-ethylamino}-phenyl, 3- oder 4-{β-[2-Sulfo-4-(β'-sulfatoethylsulfonyl)-phen]-ethylamino}-phenyl, 3- oder 4-[β-(β'-Chlorethylsulfonyl)-ethylamino]-phenyl, 3- oder 4-[β-(β'-Sulfatoethylsulfonyl)-ethylamino]-phenyl, 3- oder 4-[β-(Vinylsulfonyl)-ethylamino]-phenyl, 3- oder 4-[γ-(β'-Chlorethylsulfonyl)-propylamino]-phenyl, 3- oder 4-[γ-(β'-Sulfatoethylsulfonyl)-propylamino]-phenyl, 3- oder 4-[γ-(Vinylsulfonyl)-propylamino]-phenyl, 3,4-Di-(β-sulfatoethylsulfonyl)-phenyl, 2,5-Di-(β-sulfatoethylsulfonyl)-phenyl, 4-[γ-(β'-Sulfatoethylsulfonyl)-propoxy]-phenyl, 2,5-Bis-[(β-sulfatoethylsulfonyl)-methyl]-phenyl, 3- oder 4-{N-[γ-(β'-Sulfatoethylsulfonyl)-propyl-amidocarbonyl]}-phenyl, 3,5-Bis-{N-[γ-(β'-sulfatoethylsulfonyl)-propyl-amidocarbonyl]}-phenyl, 3-Sulfo-4-{[N-γ-[β'-sulfatoethylsulfonyl)-propyl-amidocarbonyl]-methoxy}-phenyl und 4-{-N-γ-(β'-Sulfatoethylsulfonyl)-propyl-amidocarbonyl]-methoxy}-phenyl.

Aromatische Reste von als Diazokomponenten dienenden Diaminobenzol- und Diaminonaphthalin-Verbindungen entsprechend den allgemeinen Formeln $H_2N-D-NH_2$ bzw. $H_2-N-D_2-NH_2$, die den faserreaktiven Rest Z enthalten, sind bevorzugt Reste der allgemeinen Formeln (6a) und (6b)

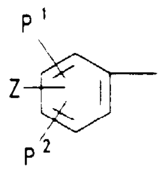
(6a)
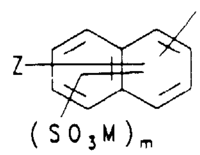
(6b)

in welchen Z, M, m, $P^1$ und $P^2$ die oben angegebenen, insbesondere bevorzugten Bedeutungen haben, wobei der Benzolkern in Formeln (6a) und (6b) zusätzlich in ortho-Stellung zur freien Bindung, die zur Azogruppe führt, eine Hydroxygruppe enthalten kann.

Aromatische Reste E einer kupplungsfähigen und diazotierbaren Verbindung der allgemeinen Formel $H-E-NH_2$ sind beispielsweise solche der allgemeinen Formeln (7a), (7b) und (7c)

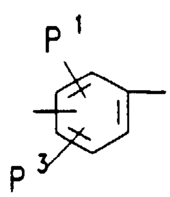
(7a)
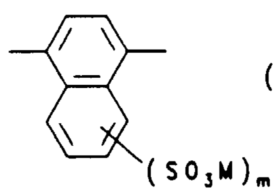
(7b)
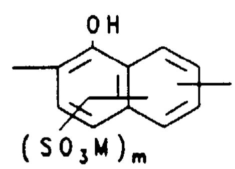
(7c)

in welchen

| | |
|---|---|
| $P^1$, M und m | die oben angegebenen Bedeutungen haben und |
| $P^3$ | Wasserstoff, Alkyl von 1 bis 4 C-Atomen, wie Methyl oder Ethyl, Alkoxy von 1 bis 4 C-Atomen, wie Methoxy und Ethoxy, Chlor, Alkanoylamino von 2 bis 5 C-Atomen, wie Acetylamino und Propionylamino, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist. |

Reste $-K-R^G$ von Kupplungskomponenten der allgemeinen Formel $H-K-R^G$, die die faserreaktive Gruppe der Formel $-SO_2-Y$ tragen, sind beispielsweise solche der allgemeinen Formeln (8a) bis (8h)

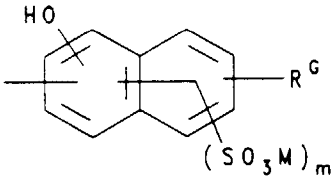 (8a) 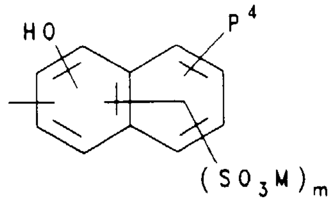 (8b)

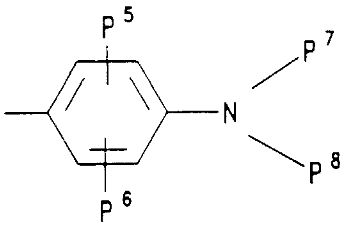 (8c) 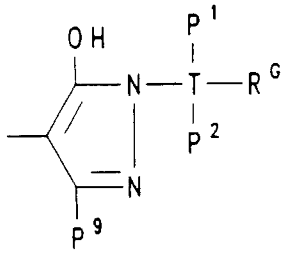 (8d)

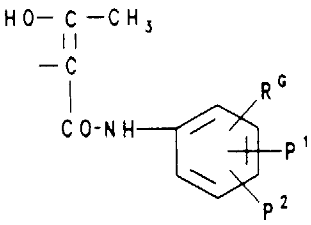 (8e) 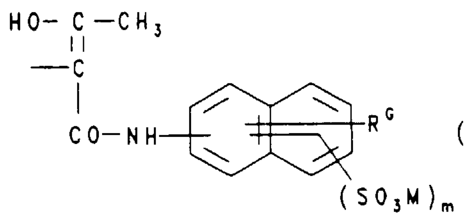 (8f)

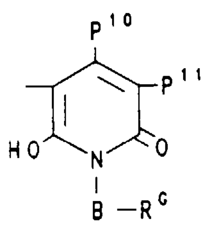 (8g) 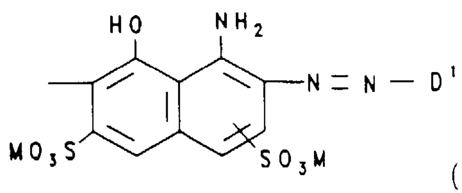 (8h)

in welchen

| | |
|---|---|
| $R^G$, $P^1$, $P^2$, m und M | die obengenannten Bedeutungen haben, |
| $P^4$ | Phenylureido ist, das im Phenylrest durch Chlor, Methyl, Methoxy, Sulfo und/oder Carboxy substituiert sein kann und durch eine Gruppe $-SO_2$-Y mit Y der obigen Bedeutung substituiert ist, oder Benzoylamino ist, das im Benzolrest durch Chlor, Methyl, Methoxy, Nitro, Sulfo und/oder Carboxy substituiert sein kann und durch eine Gruppe $-SO_2$-Y mit Y der obigen Bedeutung substituiert ist, |
| $P^5$ | Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist, |
| $P^6$ | Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, Ureido oder Phenylureido ist, |

$P^7$ Wasserstofff oder Alkyl von 1 bis 4 C-Atomen ist, das durch Hydroxy, Cyano, Carboxy, Sulfo, Sulfato, Methoxycarbonyl, Ethoxycarbonyl oder Acetoxy oder eine Gruppe $-SO_2-Y$ obiger Definition substituiert sein kann,

$P^8$ Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann und durch eine Gruppe $-SO_2-Y$ obiger Definition substituiert ist, oder Benzyl oder Phenyl oder durch Alkyl von 1 bis 4 C-Atomen, Alkoxy von 1 bis 4 C-Atomen, Chlor und/oder Sulfo substituiertes Phenyl ist, wobei jeweils der Phenylrest durch eine Gruppe $-SO_2-Y$ obiger Definition substituiert ist,

$P^9$ Wasserstoff, Alkyl von 1 bis 4 C-Atomen, wie Methyl, Cyano, Carboxy, Carbalkoxy von 2 bis 5 C-Atomen, wie Carbomethoxy und Carbethoxy, Carbamoyl oder Phenyl, bevorzugt Methyl, Carboxy, Methoxycarbonyl, Ethoxycarbonyl oder Phenyl und insbesondere Methyl oder Carboxy, ist

T für einen Benzol- oder Naphthalinring, bevorzugt Benzolring, steht,

$P^{10}$ Wasserstoff oder Alkyl von 1 bis 4 C-Atomen, wie Methyl, oder durch Alkoxy von 1 bis 4 C-Atomen, wie Methoxy, oder Cyano substituiertes Alkyl von 1 bis 4 C-Atomen ist, bevorzugt Alkyl von 1 bis 4 C-Atomen oder Phenyl ist,

$P^{11}$ Wasserstoff, Chlor, Brom, Sulfo, Carbamoyl, Methylsulfonyl, Phenylsulfonyl, Cyano oder Sulfoalkyl von 1 bis 4 C-Atomen bedeutet, bevorzugt Wasserstoff, Sulfo, Sulfoalkyl mit einem Alkylrest von 1 bis 4 C-Atomen, wie Sulfomethyl, Cyano oder Carbamoyl ist,

B Alkylen von 1 bis 4 C-Atomen, Methylenphenylen, Ethylenphenylen, Phenylenmethylen, Phenylenethylen oder Phenylen oder im Benzolrest durch Fluor, Chlor, Brom, Methyl, Methoxy, Cyano, Sulfo, Carboxy, Acetyl, Nitro, Carbamoyl und/oder Sulfamoyl substituiertes Methylenphenylen, Ethylenphenylen oder Phenylen ist und

$D^1$ ein Rest der allgemeinen Formel (5a) oder (5b) ist.

Reste -K-Z von Kupplungskomponenten der allgemeinen Formel H-K-Z bzw. $H-K-N(R^X)H$ sind beispielsweise Reste der allgemeinen Formeln (9a) bis (9h)

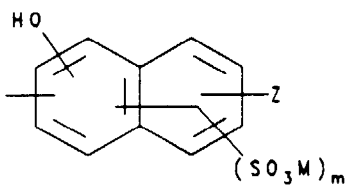

(9a)

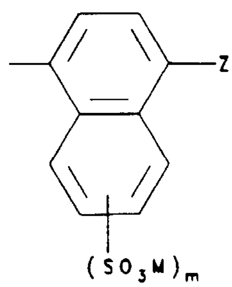

(9b)

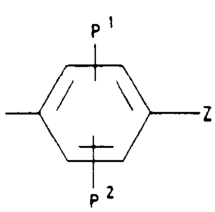

(9c)

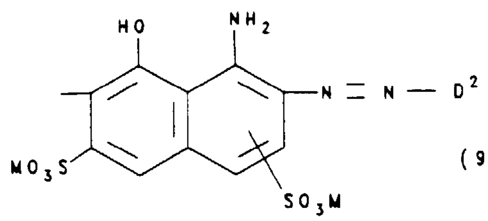

(9d)

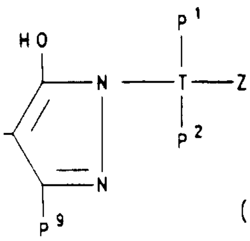

(9e)

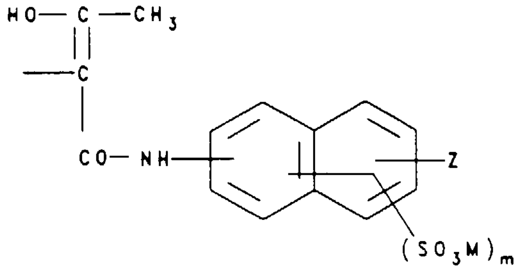

(9f)

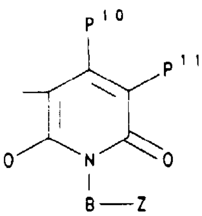

(9g)

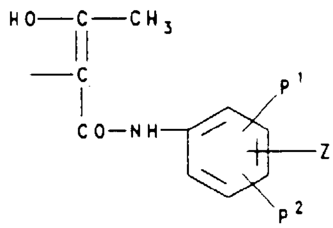

(9h)

in welchen
R, $P^1$, $P^2$, $P^9$, $P^{10}$, $P^{11}$, B, T, M, m und Z die oben angegebenen, insbesondere bevorzugten, Bedeutungen haben und

$D^2$ als Rest einer Diazokomponente ein Rest der obengenannten und definierten allgemeinen Formel (6a) oder (6b) ist.

In den obigen Formeln (8a), (8b) und (9a) steht die freie Bindung, die zur Azogruppe führt, in ortho-Stellung zur Hydroxygruppen an den aromatischen Kern gebunden.

Reste K bzw. $K^1$ in den Formeln (4h) und (4g) mit einem metallkomplex-bindenden Sauerstoffatom, die die Gruppe Z enthalten, sind insbesondere solche der Formeln (10a) bis (10e)

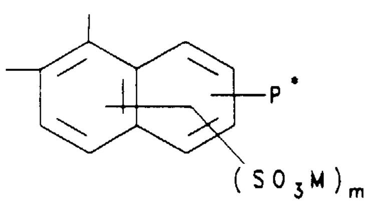

(10a)

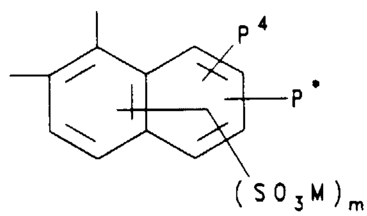

(10b)

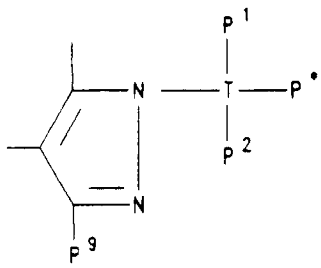

(10c)

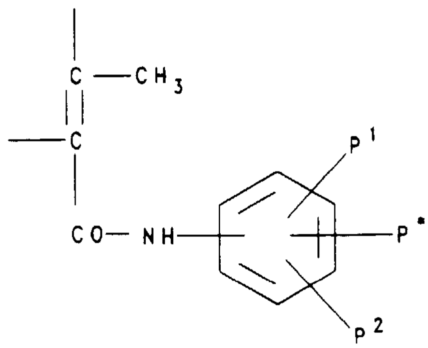

(10d)

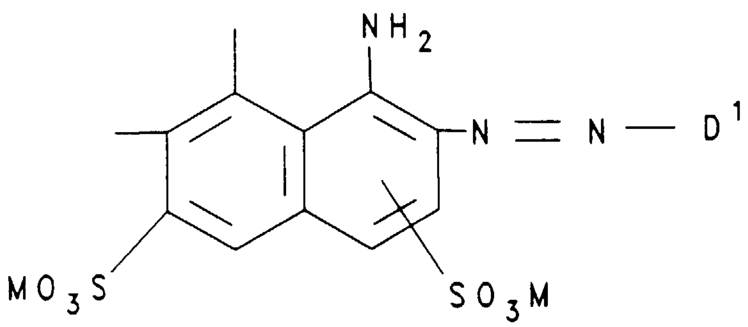

(10e)

in welchen die einzelnen Formelglieder eine der obengenannten Bedeutungen haben und P* entweder einen Rest Z oder eine Gruppierung der Formel -N=N-K-Z bedeutet.

Von den Azofarbstoffen sind weiterhin bevorzugt solche, die den allgemeinen Formeln (12A) bis (12V) entsprechen, hiervon insbesondere solche entsprechend den allgemeinen Formeln (12A), (12B), (12E), (12F), (12G), (12J), (12K), (12N), (12P) und (12V):

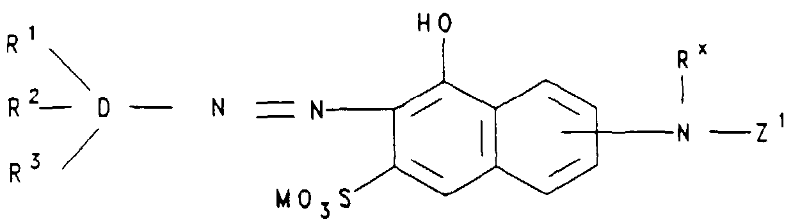

(12A)

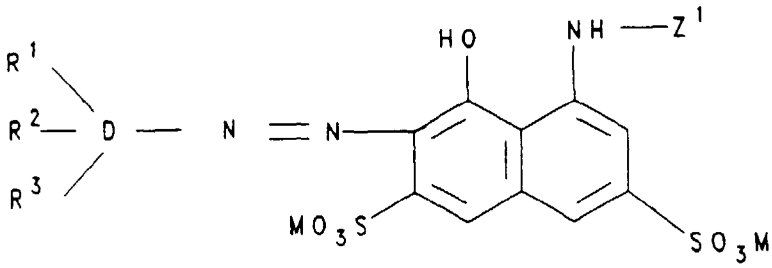

(12B)

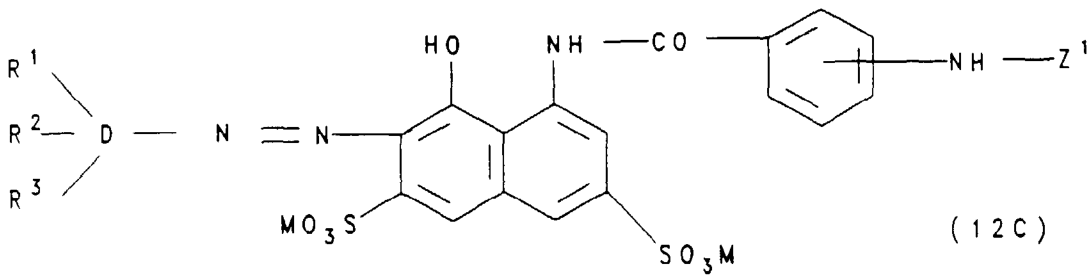

(12C)

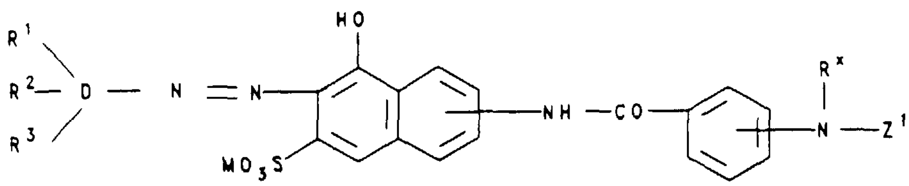

(12D)

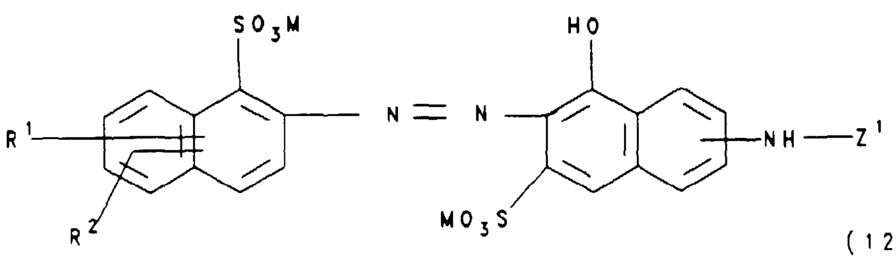

(12E)

(12E)

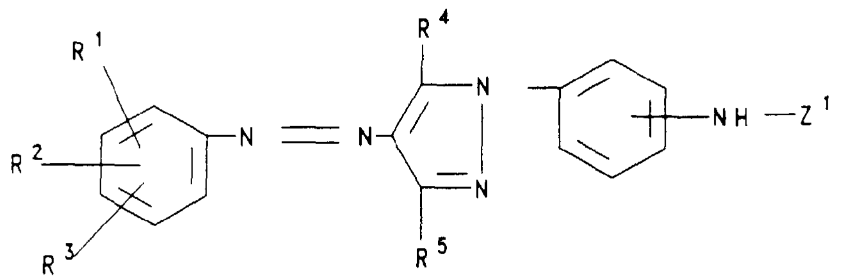

(12F)

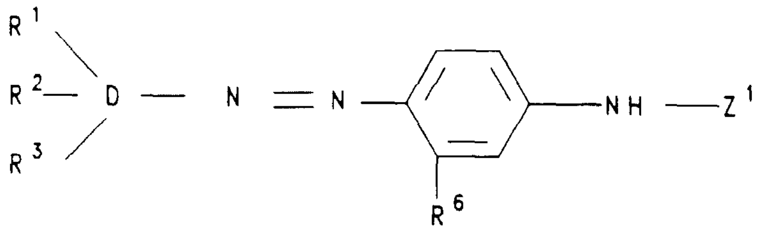

(12G)

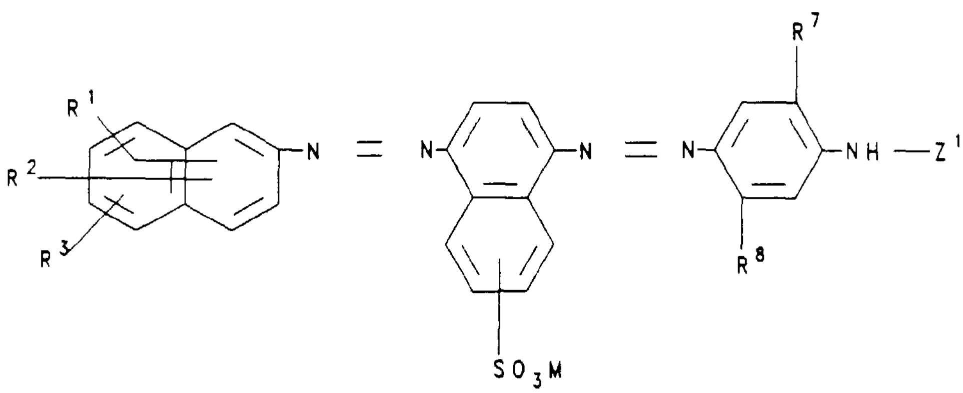

(12H)

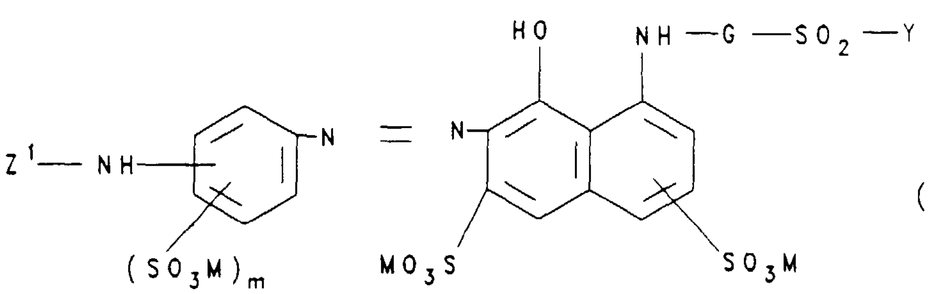

(12J)

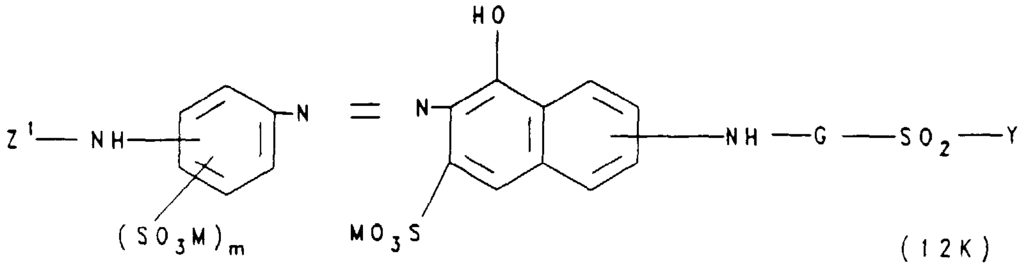

(12K)

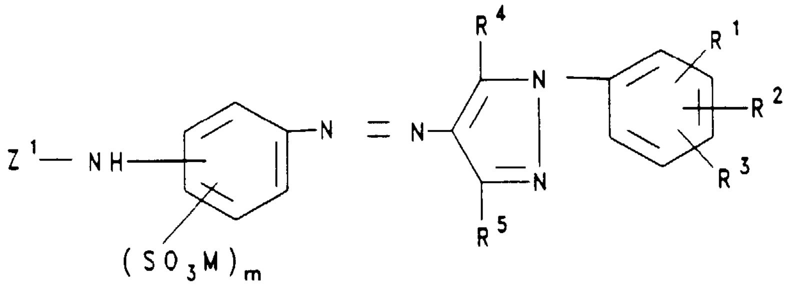

(12L)

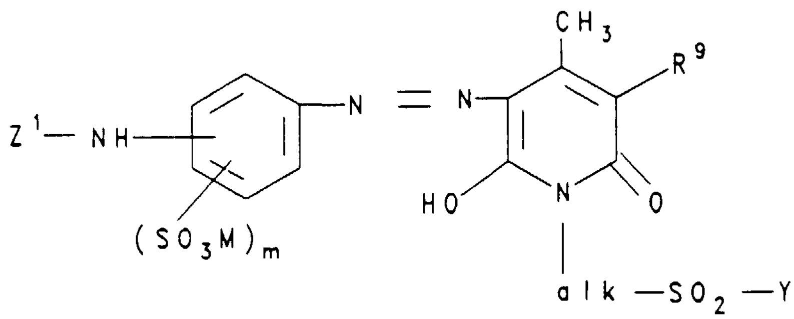

(12M)

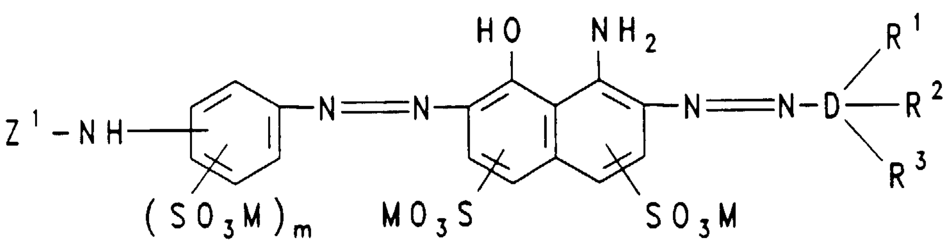

(12N)

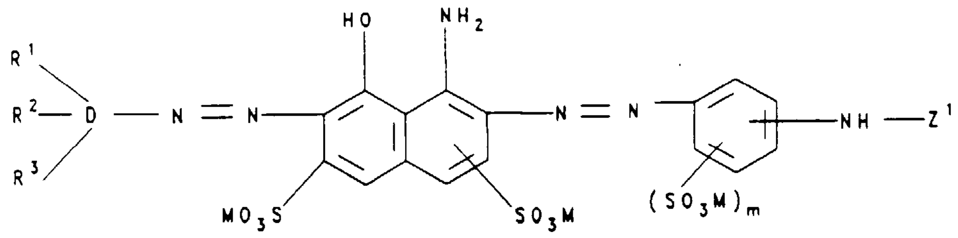

(12P)

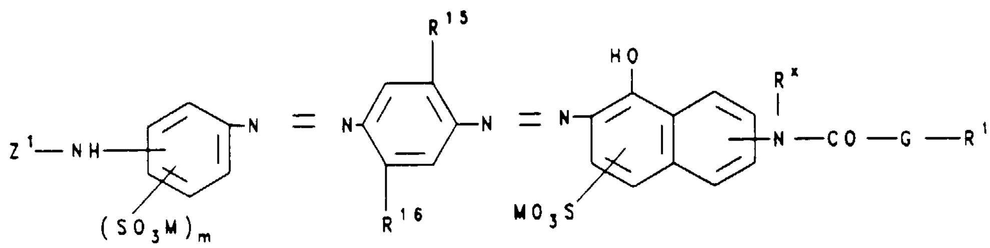

(12Q)

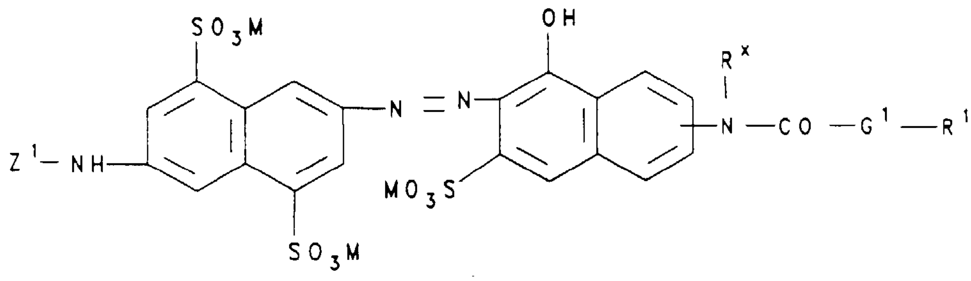

(12R)

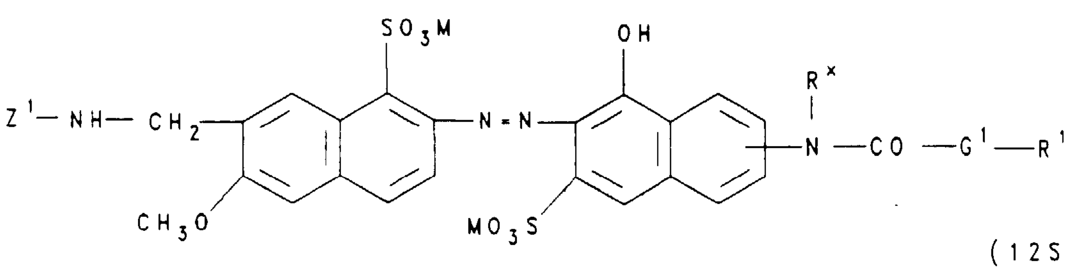

(12S)

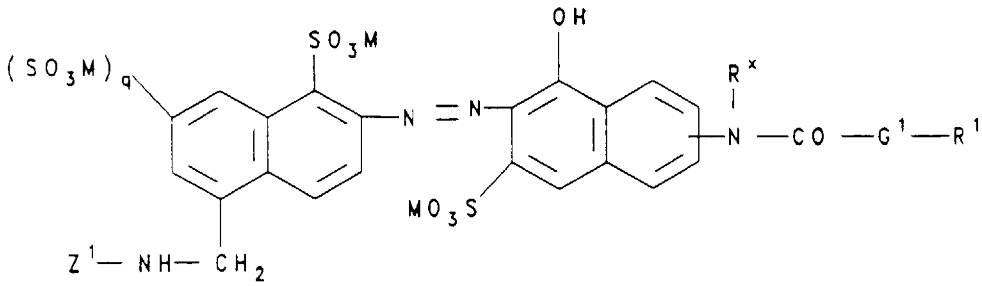

(12T)

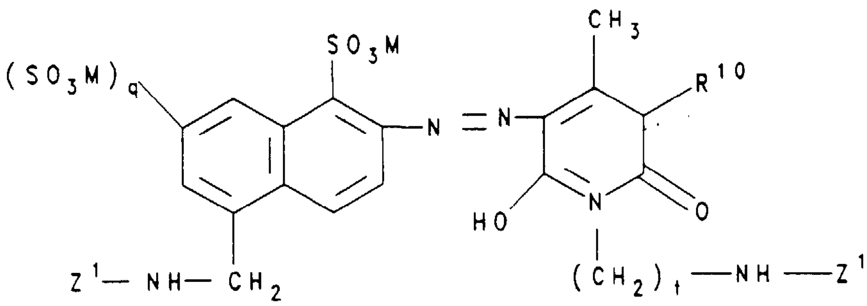

(12U)

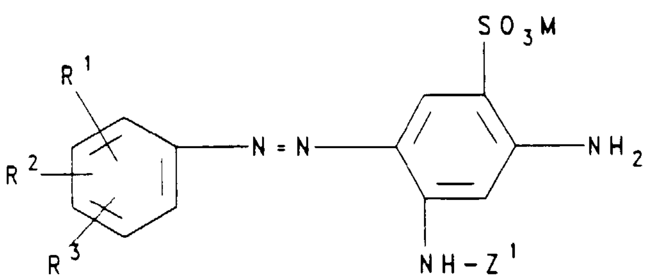

(12V)

In diesen bedeuten:

$Z^1$ ist ein Rest der Formel (3A) oder (3B)

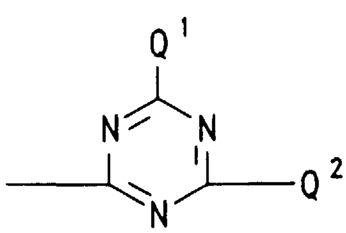

(3A)

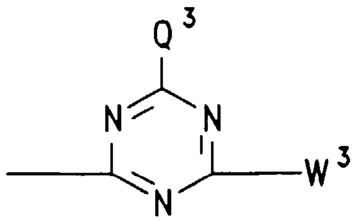

(3B)

in welchen $Q^1$, $Q^2$, $Q^3$ und $W^3$ die obengenannten Bedeutungen haben;

M hat eine der obengenannten Bedeutungen;

$R^X$ ist Wasserstoff oder Alkyl von 1 bis 4 C-Atomen, wie Methyl oder Ethyl, bevorzugt Wasserstoff;

D ist ein Benzolring oder ist ein Naphthalinring, wobei die Azogruppe an den Naphthalinring bevorzugt in β-Stellung gebunden ist und wobei im Falle, daß D den Naphthalinring bedeutet, $R^2$ und $R^3$ bevorzugt jedes, unabhängig voneinander, ein Wasserstoffatom oder eine Sulfogruppe bedeuten;

$R^1$ ist β-Sulfatoethylsulfonyl, β-Chlorethylsulfonyl oder Vinylsulfonyl;

$R^2$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy, Sulfo, oder eine Gruppe der Formel $-SO_2-Y$ mit Y der obengenannten Bedeutung, wie β-Sulfatoethylsulfonyl, β-Chlorethylsulfonyl oder Vinylsulfonyl und ist bevorzugt Wasserstoff;

$R^3$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Halogen, wie Chlor und Brom, Carboxy oder Sulfo, bevorzugt Wasserstoff;

$R^4$ ist Hydroxy oder Amino, bevorzugt Hydroxy;

$R^5$ ist Methyl, Carboxy, Carbomethoxy oder Carbethoxy, bevorzugt Methyl oder Carboxy;

$R^6$ ist Acetylamino, Ureido oder Methyl;

$R^7$ ist Wasserstoff, Alkyl von 1 bis 4 C-Atomen, wie Methyl und Ethyl, Alkoxy von 1 bis 4 C-Atomen, wie Methoxy und Ethoxy, Halogen, wie Brom und insbesondere Chlor, vorzugsweise Wasserstoff, Methyl, Ethyl, Methoxy, Ethoxy oder Chlor;

$R^8$ ist Wasserstoff oder Alkyl von 1 bis 4 C-Atomen, wie Methyl und Ethyl, Alkanoylamino von 2 bis 5 C-Atomen, wie Acetylamino und Propionylamino, oder Ureido, vorzugsweise Wasserstoff, Methyl, Ethyl, Methoxy, Ethoxy, Acetylamino oder Ureido;

$R^9$ ist Wasserstoff, Cyano, Carbamoyl, Sulfamoyl oder Sulfomethyl, bevorzugt Wasserstoff oder Carbamoyl;

$R^{10}$ ist Cyano, Carbamoyl oder Sulfomethyl;

alk ist Alkylen von 2 bis 4 C-Atomen, vorzugsweise Ethylen;

G ist Alkylen von 2 bis 4 C-Atomen, vorzugsweise n-Ethylen oder insbesondere n-Propylen, oder ist Carbonylphenylen;

$G^1$ ist Phenylen oder ist ein Rest der Formel $-NH-(CH_2)_3-$ ;

m ist die Zahl Null, 1 oder 2 (wobei im Falle von m gleich Null diese Gruppe Wasserstoff ist);

q steht für die Zahl Null oder 1 (wobei im Falle von q gleich Null diese Gruppe Wasserstoff bedeutet);

t steht für die Zahl 2 oder 3;

in den Verbindungen der Formeln (12A), (12D), (12E), (12K) und (12Q) bis (12T) steht die Aminogruppierung mit dem faserreaktiven Rest in 2- oder 3-Stellung an den 8-Naphthol-Rest gebunden.

Die vorliegende Erfindung betrifft weiterhin Verfahren zur Herstellung der erfindungsgemäßen Farbstoffe der allgemeinen Formel (1). Sie lassen sich in an und für sich in üblicher Weise analog bekannten, für die jeweiligen Farbstoffklasse spezifischen Synthesewegen herstellen, indem man für den jeweiligen Farbstoff typische Vorprodukte, von denen mindestens eines eine Gruppe der allgemeinen Formel (3) und mindestens eines eine Gruppe der allgemeinen Formel (5) enthält (wobei bei den Ausgangsverbindungen die Gruppe Y im Rest (5) auch eine Gruppe $Y^1$ nachstehender Bedeutung sein kann), miteinander umsetzt, oder indem man von einer aminogruppenhaltigen Ausgangsverbindung der allgemeinen Formel (20)

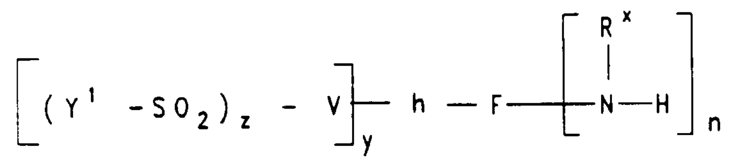

(20)

in welcher F, $R^x$, V, h, y, z und n die obengenannten Bedeutungen haben und $Y^1$ eine der oben für Y genannten Bedeutungen besitzt oder die β-Hydroxyethylgruppe ist, ausgeht und diese, ein Trihalogen-s-triazin der allgemeinen Formel (21)

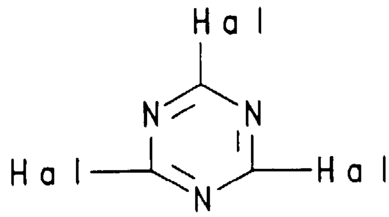

(21)

in welcher Hal für ein Halogenatom, wie insbesondere Chlor- oder Fluoratom, steht, eine Verbindung der allgemeine Formel H-$Q^1$ und eine Verbindung der allgemeinen Formel H-$Q^2$ mit $Q^1$ und $Q^2$ der obengenannten Bedeutung in stöchiometrischen Mengen in beliebiger Reihenfolge miteinander umsetzt, und man gegebenenfalls anschließend weitere, dem Fachmann geläufige, erforderliche Umwandlungsreaktionen durchführt, wie bspw. beim Einsatz von Ausgangsverbindungen mit der Gruppe $Y^1$ gleich β-Hydroxyethyl die anschließende Überführung der erhaltenen Verbindung mit der β-Hydroxyethylsulfonyl-Gruppe in den erfindungsgemäßen Farbstoff mit einer Gruppe Y-$SO_2$- obiger Bedeutung.

Insbesondere lassen sich die erfindungsgemäßen Farbstoffe erfindungsgemäß herstellen, indem man eine Verbindung entsprechend der allgemeinen Formel (22)

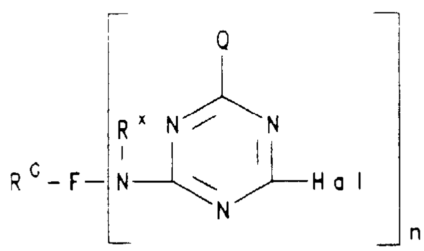

(22)

in welcher $R^G$ , F, $R^x$ und n die obengenannte Bedeutungen haben, wobei $R^G$ statt der Gruppe Y-$SO_2$- auch die Gruppe $Y^1$-$SO_2$- enthalten kann, Hal für ein Halogenatom, wie insbesondere ein Chlor- oder Fluoratom, steht und Q den Rest $Q^1$ oder $Q^2$ bedeutet, mit einer Verbindung der Formel H-$Q^1$ oder H-$Q^2$ umsetzt, indem man eine Verbindung der allgemeinen Formel (20) mit einer Verbindung der allgemeinen Formel (23)

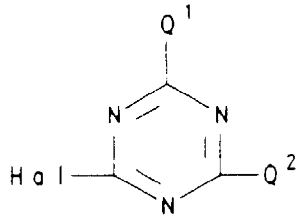

(23)

mit Hal, $Q^1$ und $Q^2$ der obengenannten Bedeutung umsetzt.

Die Umsetzungen der Ausgangsverbindungen erfolgen im wäßrigen oder wäßrigorganischen Medium in Suspension oder Lösung. Führt man die Umsetzungen in einem wäßrig-organischen Medium durch, so ist das organische Medium beispielsweise Aceton, Dimethylformamid und N-Methyl-pyrrolidon. Vorteilhaft wird der bei der Kondensation

freiwerdende Halogenwasserstoff laufend durch Zugabe wäßriger Alkalihydroxide, -carbonate oder -bicarbonate neutralisiert.

Die Umsetzungen der Verbindungen der allgemeinen Formel (22) mit einer Verbindung der Formel H-$Q^1$ bzw. H-$Q^2$ werden in der Regel bei einem pH-Wert zwischen 2 und 12, bevorzugt zwischen 3 und 6, und bei einer Temperatur zwischen 10 und 100°C, bevorzugt zwischen 40 und 80°C, durchgeführt.

Die Umsetzungen der Verbindungen der allgemeinen Formel (20) mit einer Halogentriazinverbindung der allgemeinen Formel (23) erfolgen in der Regel bei einem pH-Wert zwischen 2 und 8, bevorzugt zwischen 3 und 6, und bei einer Temperatur zwischen 20 und 110°C, bevorzugt zwischen 40 und 80°C.

Die Ausgangsverbindungen der allgemeinen Formel (22) erhält man durch Umsetzung einer aminogruppenhaltigen Ausgangsverbindung der allgemeinen Formel (20) mit einer Dihalogentriazinverbindung der allgemeinen Formel (24)

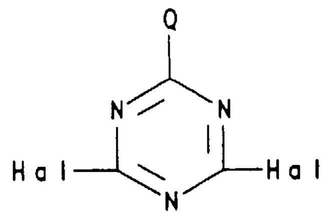

(24)

mit Hal und Q der obengenannten Bedeutung. In der Regel erfolgt die Umsetzung bei einem pH-Wert zwischen 2 und 10, bevorzugt zwischen 2 und 7, und bei einer Temperatur zwischen 0 und 60°C, bevorzugt zwischen 10 und 50°C.

Die Ausgangsverbindungen der allgemeinen Formel (23) erhält man durch Umsetzung eines Trihalogen-s-triazins, wie Cyanurchlorid oder Cyanurfluorid, mit einer Verbindung der allgemeinen H-$Q^1$ und H-$Q^2$ in beliebiger Reihenfolge, wobei man jedoch bevorzugt das Trihalogen-s-triazin mit derjenigen Verbindung H-$Q^1$ bzw. H-$Q^2$ zuerst umsetzt, die die geringste Basizitität besitzt. Gleiches gilt auch für die Herstellung der Ausgangsverbindungen der allgemeinen Formel (24). Bevorzugt ist deshalb in Formel (24) der Rest Q und in Formel (23) der zuerst eingeführte Rest $Q^1$ bzw. $Q^2$ beispielsweise der Cyanamidorest oder ein Rest der allgemeinen Formel (2c) bzw. (2f) und (2d). Die Umsetzung des Trihalogen-s-triazins mit der ersten Verbindung H-$Q^1$ bzw. H-$Q^2$ erfolgt in der Regel bei einem pH-Wert zwischen 2 und 10, bevorzugt zwischen 3 und 9, und bei einer Temperatur zwischen 0 und 20°C, bevorzugt zwischen 0 und 10°C, und die Umsetzung mit der zweiten Verbindung H-$Q^2$ bzw. H-$Q^1$ in der Regel bei einem pH-Wert zwischen 2 und 10, bevorzugt zwischen 3 und 9, und bei einer Temperatur zwischen 20 und 80°C, bevorzugt zwischen 30 und 60°C.

Welche der obengenannten Verfahrensweisen sowohl bei der Synthese der Farbstoffe der allgemeinen Formel (1) als auch bei der Synthese der Ausgangsverbindungen mit einem Triazinrest mit Vorteil angewendet werden können, hängt zum einen von der Löslichkeit der eingesetzten Ausgangsverbindungen und der Zwischenprodukte ab sowie von den zu wählenden Reaktionsbedingungen hinsichtlich der Basizität der Reaktanten zu einer der Trihalogen- bzw. Dihalogen- bzw. Monohalogen-s-triazin-Verbindungen und kann von Fall zu Fall durch einen kleinen Vorversuch entschieden werden. Die erfindungsgemäße Herstellung der Farbstoffe der allgemeinen Formel (1) durch Umsetzung einer Verbindung der allgemeinen Formel (22) mit einer Verbindung der Formel H-$Q^1$ bzw. H-$Q^2$ ist in demjenigen Falle besonders geeignet, wenn die Ausgangsverbindung (22) eine alkaliempfindliche Gruppe, wie beispielsweise eine besonders alkaliempfindliche faserreaktive Gruppe $R^G$ enthält und die Umsetzung mit der Verbindung H-$Q^1$ bzw. H-$Q^2$ unter sauren oder neutralen Bedingungen eingeführt werden kann.

Läßt sich dagegen diese zweite Gruppe $Q^1$ bzw. $Q^2$ nur unter alkalischen Bedingungen in das Farbstoffmolekül mit einer alkaliempfindlichen Gruppe bzw. in ein entsprechendes Vorprodukt mit einer alkaliempfindlichen Gruppe einführen, so geht man bevorzugt von einer Ausgangsverbindung aus, in welcher der Rest Y dem Rest $Y^1$ gleich der β-Hydroxyethyl-Gruppe entspricht.

Die anschließende Überführung der β-Hydroxyethylsulfonyl-Gruppe im Falle der Verwendung einer Ausgangsverbindung mit $Y^1$ gleich der β-Hydroxyethyl-Gruppe in eine Gruppe Y, die eine in β-Stellung durch einen alkalisch eliminierbaren Substituenten substituierte Ethylgruppe ist, erfolgt analog bekannten Verfahrensweisen solcher Umsetzungen, die in der Literatur zahlreich für Farbstoffe mit dem faserreaktiven Rest des Vinylsulfontyps beschrieben sind. In der Regel wird zunächst die β-Hydroxyethylsulfonyl-Gruppe verestert, so beispielsweise in die Estergruppe der Phosphorsäure, einer niederen Alkancarbonsäure, einer aromatischen Sulfonsäure oder bevorzugt der Schwefelsäure übergeführt. Diese Veresterungsreaktion erfolgt mit den üblichen Veresterungs- und Acylierungsmitteln für solche Säuren, wie beispielsweise Acetanhydrid, Polyphosphorsäure, Phosphorpentachlorid und insbesondere 96-100 %ige Schwefelsäure oder Schwefeltrioxyd enthaltende Schwefelsäure, wie Oleum mit einem Schwefeltrioxydgehalt von bis zu 35 %, oder Chlorsulfonsäure zur Einführung der Sulfatogruppe. Die Umsetzung mit Schwefelsäure oder Schwefeltrioxyd enthaltender Schwefelsäure erfolgt bei einer Temperatur zwischen 0°C und 25°C. Die Umsetzung mit Chlorsulfonsäure

kann auch in einem polaren organischen Lösemittel, wie beispielsweise N-Methyl-pyrrolidon, bei 10 bis 80°C erfolgen.

Die erfindungsgemäßen Farbstoffe der allgemeinen Formel (1) können in üblicher und bekannter Verfahrensweise in erfindungsgemäße Farbstoffe der allgemeinen Formel (1) mit einer anderen Gruppe $-SO_2-Y$ übergeführt werden. Solche Verfahrensweisen sind in der Literatur, faserreaktive Farbstoffe mit dem faserreaktiven Rest der Vinylsulfonreihe betreffend, zahlreich beschrieben. So können erfindungsgemäße Farbstoffe mit dem β-Sulfatoethylsulfonyl-Rest durch Behandlung mit einem Alkali, wie in wäßriger Natronlauge bei einer Temperatur von 0 bis 40°C während einiger Minuten, in erfindungsgemäße Farbstoffe mit der Vinylsulfonylgruppe überführt werden. Erfindungsgemäße Farbstoffe mit dem β-Thiosulfatoethylsulfonyl-Rest lassen sich beispielsweise aus Farbstoffen mit der Vinylsulfonylgruppe durch Umsetzung mit Natriumthiosulfat gewinnen.

Geht man bei der erfindungsgemäßen Synthese der Azofarbstoffe von Diazo- und Kupplungskomponenten aus, die die Gruppen der allgemeinen Formeln (3) und (5) enthalten, erfolgen die Umsetzungen in der üblichen Verfahrensweise der Diazotierungs- und Kupplungsreaktionen, so die Diazotierung in der Regel bei einer Temperatur zwischen -5°C und + 15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle einer aminogruppenhaltigen Kupplungskomponente und bei einem pH-Wert zwischen 3 und 7,5 im Falle einer hydroxygruppenhaltigen Kupplungskomponente und bei einer Temperatur zwischen 0 und 25°C, ebenso bevorzugt in wäßrigem Medium.

Bei der erfindungsgemäßen Synthese von Schwermetallkomplex-Azofarbstoffen, beispielsweise solchen entsprechend der allgemeinen Formel (4g), geht man in der Regel von solchen schwermetallfreien Azoverbindungen aus, die in der Kupplungskomponente eine phenolische oder naphtholische Hydroxygruppe in ortho-Stellung bzw. vicinaler Stellung zur Azogruppe gebunden enthalten und deren Diazokomponentenrest in ortho-Stellung zur Azogruppe ein Wasserstoffatom oder eine Hydroxygruppe oder eine niedere Alkoxygruppe, wie Methoxygruppe, gebunden enthält, wobei die schwermetallfreien Ausgangs-Azoverbindungen zudem einen Acylaminorest gebunden enthalten können, wie einen Acetylaminorest. Beispielsweise kann man bei der Synthese der Kupferkomplex-Azofarbstoffe der Formel (4g), wie solcher der Formel (4j), von einer Ausgangsverbindung entsprechend der allgemeinen Formel (25)

$$R^G - \underset{\displaystyle R^k}{\overset{|}{D_1}} - N = N - \underset{}{\overset{\displaystyle HO \atop |}{K^1}} -(N=N-K)_v \text{-acylamino} \qquad (25)$$

ausgehen, in welcher $D_1$, K, $K^1$ und v eine der obengenannten Bedeutungen haben und $R^k$ ein Wasserstoffatom oder eine in ortho-Stellung zur Azogruppe an $D_1$ gebundene Hydroxy- oder Methoxygruppe ist, und diese acylaminogruppenhaltige Ausgangs-Azoverbindung analog bekannten und üblichen Verfahrensweisen mit einem kupferabgebenden Mittel, wie einem Kupfersalz, umsetzen. Ist $R^k$ ein Wasserstoffatom oder eine Methoxygruppe, so kann man die Verbindung (25) einer auf üblichen Wege durchzuführenden oxidativen oder entalkylierenden Kupferungsreaktion unterwerfen. Die nun erhaltene Kupferkomplex-Azoverbindung mit der Acylaminogruppe kann sodann analog bekannten Verfahrensweisen nach oder unter Hydrolyse der Acylaminogruppe zur Aminogruppe mit einem Cyanurhalogenid bzw. einer Verbindung der Formel (23) zu dem erfindungsgemäßen Farbstoff der allgemeinen Formel (1) umgesetzt werden.

Ausgangsverbindungen mit einer faserreaktiven Gruppierung $R^G$, die als Diazokomponenten dienen können, sind beispielsweise:

2-(β-Sulfatoethylsulfonyl)-anilin, 3-(β-Sulfatoethylsulfonyl)-anilin, 4-(β-Sulfatoethylsulfonyl)-anilin, 2-Carboxy-5-(β-sulfatoethylsulfonyl)-anilin, 2-Chlor-3-(sulfatoethylsulfonyl)-anilin, 2-Chlor-4-(β-sulfatoethylsulfonyl)-anilin, 2-Ethoxy-4- oder -5-(β-sulfatoethylsulfonyl)-anilin, 2-Ethyl-4-(β-sulfatoethylsulfonyl)-anilin, 2-Methoxy-5- oder -4-(β-sulfatoethylsulfonyl)-anilin, 2,4-Diethoxy-5-(β-sulfatoethylsulfonyl)-anilin, 2,4-Dimethoxy-5-(β-sulfatoethylsulfonyl)-anilin, 2,5-Dimethoxy-4-(β-sulfatoethylsulfonyl)-anilin, 2-Methoxy-5-methyl-4-(β-sulfatoethylsulfonyl)-anilin, 2- oder 3- oder 4-(β-Thiosulfatoethylsulfonyl)-anilin, 2-Methoxy-5-(β-thiosulfatoethylsulfonyl)-anilin, 2-Sulfo-4-(β-phosphatoethylsulfonyl)-anilin, 2-Sulfo-4-vinylsulfonyl-anilin, 2-Hydroxy-4- oder -5-(β-sulfatoethylsulfonyl)-anilin, 2-Chlor-4- oder -5-(β-chlorethylsulfonyl)-anilin, 2-Hydroxy-3-sulfo-5-(β-sulfatoethylsulfonyl)-anilin, 3- oder 4-(β-Acetoxyethylsulfonyl)-anilin, 5-(β-Sulfatoethylsulfonyl)-2-amino-naphthalin, 6- oder 7- oder 8-(β-Sulfatoethylsulfonyl-2-amino-naphthalin, 6-(β-Sulfatoethylsulfonyl)-1-sulfo-2-amino-naphthalin, 5-(β-Sulfatoethylsulfonyl)-1-sulfo-2-amino-naphthalin, 8-(β-Sulfatoethylsulfonyl)-6-sulfo-2-amino-naphthalin, 3- oder 4-{β-[4-(β'-Sulfatoethylsulfonyl)-phen]-ethylamino}-anilin, 3- oder 4-{β-[2-Sulfo-4-(β'-sulfatoethylsulfonyl)-phen]-ethylamino}-anilin, 3- oder 4-[β-(β'-Chlorethylsulfonyl)-ethylamino]-anilin, 3- oder 4-[β-(β'-Sulfatoethylsulfonyl)-ethylamino]-anilin, 3- oder 4-[β-(Vinylsulfonyl)-ethylamino]-anilin, 3- oder 4-[γ-(β'-Chlorethylsulfonyl)-propylamino]-anilin, 3- oder 4-[γ-(β'-Sulfatoethylsulfonyl)-propylamino]-anilin, 3- oder 4-[γ-(Vinylsulfonyl)-propylamino]-anilin, 3,4-Di-(β-sulfatoethylsulfonyl)-anilin, 2,5-Di-(β-sulfatoethylsulfonyl)-anilin, 4-[γ-(β'-Sulfatoethylsulfonyl)-propoxy]-anilin, 2,5-Bis-[(-β-sulfatoethylsulfonyl)-methyl]-anilin, 3- oder 4-{N-[γ-(β'-Sulfatoethylsulfonyl)-propyl-amidocarbonyl]}-anilin, 3,5-Bis-{N-[γ-[β'-sulfatoethylsulfonyl)-propyl-amidocarbonyl]}-anilin, 3-Sulfo-4-{[N-γ-[β'-sulfatoethylsulfonyl)-propyl-amidocarbonyl]-methoxy}anilin und 4-{-N-γ-(β'-Sulfatoethylsulfonyl)-propyl-amidocarbonyl]-methoxy}-anilin.

Ausgangsverbindungen entsprechend der allgemeinen Formel $H_2N$-D-$NH_2$ bzw. $H_2N$-$D_1$-$NH_2$ sind beispielsweise 1,4-Phenylen-diamin, 1,4-Phenylendiamin-2-sulfonsäure, 1,4-Phenylendiamin-2-carbonsäure- 1,4-Diamino-naphthalin-2-sulfonsäure, 2,6-Diamino-naphthalin-8-sulfonsäure, 2,6-Diamino-naphthalin-4,8-disulfonsäure, 1,3-Phenylendiamin, 1,3-Phenylendiamin-4-sulfonsäure, 1,3-Phenylen-diamin-4,6-disulfonsäure, 1,4-Phenylendiamin-2,6-disulfonsäure, 1,4-Phenylendiamin-2,5-disulfonsäure, 1,4-Diamino-naphthalin-6-sulfonsäure, 4,4'-Diamino-diphenyl-3-sulfonsäure und 4,4'-Diamino-stilben-2,2'-disulfonsäure.

Ausgangsverbindungen entsprechend der allgemeinen Formel H-E-$NH_2$, die zur Synthese der erfindungsgemäßen Disazofarbstoffen eingesetzt werden können und als Kupplungskomponente und anschließend an die Kupplung als Diazokomponente dienen, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-Ureido-anilin, 2-Methyl-5-acetylamino-anilin, 2-Methoxy-5-acetylamino-anilin, 2-Methoxy-5-methyl-anilin, 1-Aminonaphthalin-6-sulfonsäure, 1-Aminonaphthalin-7-sulfonsäure, 2-Sulfo-5-acetylamino-anilin, 2-Amino-5-naphthol-7-sulfonsäure, 2-Amino-8-naphthol-6-sulfonsäure, 2-(4'-Amino-benzoylamino)-5-naphthol-7-sulfonsäure, 1-(4'-Amino-2-sulfophenyl)-3-methyl- oder -3-carboxy-5-pyrazolon und N-(3-Sulfo-4-amino)-acetoacetyl-anilid.

Ausgangsverbindungen, die als Kupplungskomponenten entsprechend der allgemeinen Formel H-K-$R^G$ zur Snythese der erfindungsgemäßen Azofarbstoffe dienen können, sind beispielsweise 1-[4'-(β-Sulfatoethyl-sulfonyl)-phenyl]-3-methyl-5-pyrazolon, 1-[4'-(Vinyl-sulfonyl)-phenyl]-3-methyl-5-pyrazolon, 1-[4'-(β-Sulfatoethylsulfonyl)-phenyl]-3-carboxy-5-pyrazolon, 1-[3'-[β-Chlorethylsulfonyl)-benzoylamino]-3,6-disulfo-8-naphthol, 1-[3'-(Vinylsulfonyl)-benzoylamino]-3,6-disulfo-8-naphthol, 1-[3'-(Vinylsulfonyl)-benzoylamino]-4,6-disulfo-8-naphthol, 1-[3'-(β-Sulfatoethylsulfonyl)-benzoylamino]-4,6-disulfo-8-naphthol, 2-[3'-(β-Chlorethylsulfonyl)-benzoylamino]-6-sulfo-8-naphthol, 2-[3'-(Vinylsulfonyl)-benzoylamino]-6-sulfo-8-naphthol, 3-[3'-(β-Chlorethylsulfonyl)-benzoylamino]-6-sulfo-8-naphthol, 3-[3'-(Vinylsulfonyl)-benzoyl-amino]-6-sulfo-8-naphthol, 6-Sulfo-1-[3'-(β-chlorethylsulfonyl)-benzoylamino]-naphthol, 7-Sulfo-[3'-(vinylsulfonyl)-benzoylamino]-naphthol, 2-[N-Methyl-N-(β-sulfatoethylsulfonyl)-amino]-6-sulfo-8-naphthol, 3-[N-Methyl-N-(β-sulfatoethylsulfonyl)-amino]-6-sulfo-8-naphthol, 2-[N-Ethyl-N-(β-sulfatoethylsulfonyl)-amino]-6-sulfo-8-naphthol, 1-[N'-(3'-β-Chlorethylsulfonyl-phenyl)-ureido]-3,6-disulfo-8-naphthol, 1-[N'-(3'-Vinylsulfonylphenyl)-ureido]-3,6-disulfo-8-naphthol, 1-[N'-(3'-Vinylsulfonyl-propyl)-ureido]-3,6-disulfo-8-naphthol, 1-[N'-(3'-β-Chlor-ethylsulfonyl-phenyl)-ureido]-4,6-disulfo-8-naphthol, 1-[N'-(3'-Vinylsulfonyl-phenyl)-ureido]-4,6-disulfo-8-naphthol, 1-[N'-(3'-β-Chlorethylsulfonyl-propyl)-ureido]-4,6-disulfo-8-naphthol, 2-[N'-(3'-β-Sulfatoethylsulfonyl-phenyl)-ureido]-6-sulfo-8-naphthol, 2-[N'-(3'-Chlorethylsulfonyl-propyl)-ureido]-6-sulfo-8-naphthol, 3-[N'-(3'-β-Chlorethylsulfonyl-phenyl)-ureido]-6-sulfo-8-naphthol, 3-[N'-(3'-Vinylsulfonyl-propyl)-ureido]-6-sulfo-8-naphthol, 2-Sulfo-5-[N'-(3"-β-chlorethylsulfonyl)-phenyl]-ureido-anilin, 3-[N'-(3"-β-Sulfatoethylsulfonyl)-phenyl]-ureido-anilin und 6-Sulfo-1-[N'-(3"-β-Sulfatoethylsulfonyl)-phenyl]-ureido-8-naphthol.

Kupplungskomponenten entsprechend der allgemeinen Formel H-K-N($R^x$)H, die zum Aufbau der erfindungsgemäßen Azofarbstoffe dienen können, in welchen der faserreaktive Rest Z in der Kupplungskomponente enthalten ist, wobei bei dem zunächst erhaltenen aminogruppenhaltigen Azofarbstoff entsprechend der allgemeinen Formel (20) in dessen Aminogruppe -N($R^x$)H der faserreaktive Rest $Z^1$ oder ein anderer vorgenannter Halogentriazinrest anschließend eingeführt werden kann bzw. wird, sind beispielsweise Anilin, 3-Methyl-anilin, 2,5-Dimethyl-anilin, 2,5-Dimethoxy-anilin, 3-Methoxy-anilin, 3-Acetylamino-anilin, 3-Propionylamino-anilin, 3-Butyrylamino-anilin, 3-Benzoylamino-anilin, 3-(Hydroxyacetylamino)-anilin, 3-Ureido-anilin, 2-Methyl-5-acetylamino-anilin, 2-Methoxy-5-acetylamino-anilin, 2-Methoxy-5-methyl-anilin, 1-Amino-naphthalin-6-sulfonsäure, naphthalin-4-sulfonsäure, 4-Sulfo-1,3-diamino-benzol, 6-Sulfo-2-methoxy-1-amino-naphthalin, 5,7-Disulfo-2-aminonaphthalin, hydroxynaphthaln-2,4-disulfonsäure, 1-Amino-8-hydroxynaphthalin-6-sulfonsäure, 1-Amino-8-hydroxynaphthaln-2,4-disulfonsäure, 1 -Amino-8-naphthol-3,6-disulfonsäure, 1-Amino-8-hydroxy-4,6-disulfonsäure, 1-Amino-8-hydroxy-naphthalin-2,4,6-trisulfonsäure, 2-(Methylamino)- und 2-(Ethylamino)-5-hydroxynaphthalin-7-sulfonsäure, 2-Amino-5-hydroxynaphthalin-1,7-disulfonsäure, 2-(Methylamino)- und 2-(Ethylamino)-8-hydroxynaphthalin-6-sulfonsäure, 2-Amino-8-hydroxynaphthalin-3,6-disulfonsäure, 2-(4'-Amino-3'-sulfophenylamino)-5-hydroxynaphthalin-7-sulfonsäure, 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure, 1-(β-Aminoethyl)-3-cyano-4-methyl-6-hydroxy-pyrid-2-on, 1-(γ-Aminopropyl)-3-sulfomethyl-4-methyl-6-hydroxy-pyrid-2-on, 1,3-Diaminobenzol, 3-[N,N-Di-(β-hydroxyethyl)]-amino-anilin, 3-[N,N-Di-(β-sulfatoethyl)]-amino-4-methoxy-anilin, 3-(Sulfo-benzylamino)-anilin, 3-(Sulfobenzoylamino)-4-chlor-anilin und 3-[N,N-Di-(sulfobenzyl)]-amino-anilin, 2-Sulfo-5-acetylamino-anilin, 2-Amino-5-naphthol-7-sulfonsäure, 2-Amino-8-naphthol-6-sulfonsäure, 1-(4'-Aminobenzoyl)-amino-8-hydroxynaphthalin-3,6-disulfonsäure, 1-(4'-Aminobenzoyl)-amino-8-hydroxynaphthalin-4,6-disulfonsäure, 1-(3'-Aminobenzoyl)-amino-8-hydroxynaphthalin-3,6-disulfonsäure, 1-(3'-Aminobenzoyl)-amino-8-hydroxynaphthalin-4,6-disulfonsäure, 1-(2'-Aminobenzoyl)-amino-8-hydroxy-naphthalin-3,6-disulfonsäure, 1-(2'-Aminobenzoyl)-amino-8-hydroxynaphthalin-4,6-disulfonsäure, 2-(3'-Aminobenzoyl)-amino-5-hydroxy-naphthalin-7-sulfonsäure, 2-(2'-Aminobenzoyl)-amino-5-hydroxy-naphthalin-7-sulfonsäure, 2-(4'-Aminobenzoyl)-amino-8-hydroxynaphthalin-6-sulfonsäure, 2-(3'-Aminobenzoyl)-amino-8-hydroxynaphthalin-6-sulfonsäure, 2-(2'-Aminobenzoyl)-amino-8-hydroxynaphthalin-6-sulfonsäure, 2-(4'-Aminobenzoyl)-amino-5-naphthol-7-sulfonsäure, 1-(4'-Amino- oder 1-(4'-Acetylamino-2-sulfophenyl)-3-methyl- oder -3-carboxy-5-pyrazolon, N-(3-Sulfo-4-amino)-acetoacetyl-anilid, 1-Amino-8-naphthol-3,6- oder -4,6-disulfonsäure, 1-Acetylamino-8-naphthol-3,6- oder -4,6-disulfonsäure, 2-Acetylamino-5-naphthol-7-sulfonsäure, 2-Acetylamino-8-naphthol-6-sulfonsäure, 3-Acetylamino-8-naphthol-6-sulfonsäure, 3-(N-Methyl-amino)-8-naphthol-6-sulfonsäure, 1-(3'-Amino- oder 1-(3'-Acetylamino-6'-sulfophenyl)-3-methyl- oder -3-carboxy-5-pyrazolon, 2-(N-Methyl-N-acetylamino)- oder 2-Methylamino-5-naphthol-7-sulfonsäure, N-Methyl-anilin und N-Propyl-m-toluidin.

Geht man von Diazokomponenten der Formel $H_2N$-D-$NH_2$ bzw. $H_2N$-$D_1$-$NH_2$ aus, so können diese auch in der Form der Monoacylamino-amino-Verbindungen eingesetzt werden, wobei der Acylrest insbesondere der Acetylrest ist. Diese Monoacylamino-amino-Verbindungen werden zunächst diazotiert und mit einer kuppelfähigen Verbindung gekuppelt; anschließend wird der Acylrest hydrolytisch abgespalten, und die so nunmehr wieder frei gewordene Aminogruppe kann mit dem faserreaktiven Rest $Z^1$ verbunden werden. Solche monoacylierten Diamine sind beispielsweise 2-Sulfo-5-acetylamino-anilin und 2-Sulfo-4-acetylamino-anilin. in gleicher Weise können aminogruppenhaltige Kupplungskomponenten in Form des Acylamino-Derivates in die Kupplungsreaktion eingesetzt werden, wobei anschließend auch hier der Acylrest hydrolytisch abgespalten werden kann, um die freiwerdende Aminogruppe mit der faserreaktiven Gruppe $Z^1$ zu verbinden.

Bivalente Kupplungskomponenten, die zum Aufbau erfindungsgemäßer Disazofarbstoffe dienen können, in welchen der bivalente Kupplungsrest mit zwei Diazokomponenten verbunden ist, von denen die eine einen faserreaktiven Rest $R^G$ und die andere einen faserreaktiven Rest Z enthält, beispielsweise von Farbstoffen der allgemeinen Formeln (4c) und (4d), sind beispielsweise Resorcin, 1,3-Diaminobenzol, 5,5'-Dihydroxy-7,7'-disulfo-2,2'-dinaphthyl-harnstoff, 1,8-Dihydroxy-3,6-disulfo-naphthalin und insbesondere 1-Amino-8-naphthol-3,6-disulfonsäure und 1-Amino-8-naphthol-4,6-disulfonsäure.

Die erfindungsgemäßen Farbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe der Formel (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemäßen Farbstoffe lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Besonders geeignet sind die erfindungsgemäßen Farbstoffe für das sogenannte Kaltverweilverfahren, wonach der Farbstoff zusammen mit dem Alkali auf dem Foulard aufgebracht und danach durch mehrstündiges Lagern bei Raumtemperatur fixiert wird. Nach dem Fixieren werden die Färbungen oder Drucke mit kaltem und heißem Wasser, gegebenenfalls unter Zusatz von eines dispergierend wirkenden und die Diffusion der nicht fixierten Anteile fördernden Mittels, gründlich gespült. Diese Färbe- und Druckverfahren sind zahlreich in der allgemeinen Fachliteratur wie auch in der Patentliteratur beschrieben.

Gegenstand der vorliegenden Erfindung ist deshalb auch die Verwendung der erfindungsgemäßen Farbstoffe der allgemeinen Formel (1) zum Färben (einschließlich des Bedrucken) dieser Materialien bzw. Verfahren zum Färben (und Bedrucken) solcher Materialien in an und für sich üblicher Verfahrensweise, bei welchen ein Farbstoff der allgemeinen Formel (1) als Farbmittel eingesetzt wird, indem man den Farbstoff der allgemeinen Formel (1) im wäßrigen Medium auf das Material appliziert und ihn mittels Wärme oder mittels einer alkalisch wirkenden Verbindung oder mittels beidem auf dem Material fixiert.

Falls erfindungsgemäße Anthrachinonfarbstoffe eine ungenügende Löslichkeit in der alkalischen Färbeflotte aufweisen, kann dieser Mangel in der aus der Literatur bekannten Weise durch Zusatz von Dispergatoren oder anderen nichtfarbigen Verbindungen, z.B. einem Naphthalinsulfonsäure-Formaldehyd-Kondensat oder insbesondere Anthrachinon-2-sulfonsäure, behoben werden.

Die Farbstoffe der Formel (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Farbstoffe der Formel (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten. Sie sind weiterhin sehr gut für den Einsatz in die

Ätzdruck- und Reservedruckverfahren geeignet.

Die mit den erfindungsgemäßen Farbstoffen hergestellten Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Naßechtheitseigenschaften, wie Wasch-, Wasser-, Seewasser-, Ueberfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm und Liter.

Die in diesen Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima ($\lambda_{max}$) im sichtbaren Bereich wurden anhand ihrer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

Beispiel A-1

Eine Suspension von 184 Teilen Cyanurchlorid in 2000 Teilen Eiswasser versetzt man mit 146 Teilen Acetessigsäureethylester und führt die Umsetzung bei 0°C bis 5°C unter Einhaltung eines pH-Wertes von 8 bis 9 durch Zugabe von etwa 800 Vol.-Teilen wäßriger 2N-Natronlauge durch. Anschließend klärt man die Syntheselösung, gibt 132 Teile 3-Sulfo-anilin hinzu und führt die Umsetzung bei etwa 15°C und einem pH-Wert zwischen 4 und 5 durch. Es wird eine Lösung der Verbindung der Formel

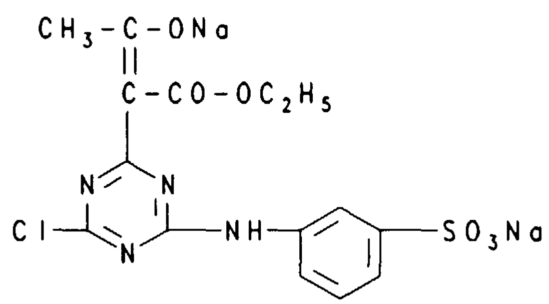

erhalten, die, wie nachfolgend beschrieben, in die Synthese von erfindungsgemäßen Farbstoffen eingesetzt werden kann (in analoger Weise können die Methylester- und Isopropylester-Derivate und Derivate mit anderen Aminoverbindungen hergestellt werden, indem man analog, wie oben beschrieben, Cyanurchlorid mit der äquivalenten Menge an Acetessigsäuremethylester bzw. Acetessigsäure-isopropylester und dem entsprechenden Amin, wie beispielsweise einer anderen Anilinsulfon- oder - carbonsäure, Ammoniak oder Taurin, umsetzt).

Beispiel A-2

Eine Suspension von 55 Teilen Cyanurchlorid in 600 Teilen Wasser werden bei 0°C mit 30,6 Teilen Acetylaceton versetzt. Die Umsetzung erfolgt bei einem pH-Wert zwischen 8 und 8,5, der mittels einer wäßrigen 2N-Natronlauge gehalten wird. Die Syntheselösung wird anschließend geklärt und mit 39,5 Teilen 3-Sulfo-anilin versetzt; die Umsetzung erfolgt bei etwa 15°C und einem pH-Wert zwischen 4 und 5. Es wird eine Lösung der Verbindung der Formel

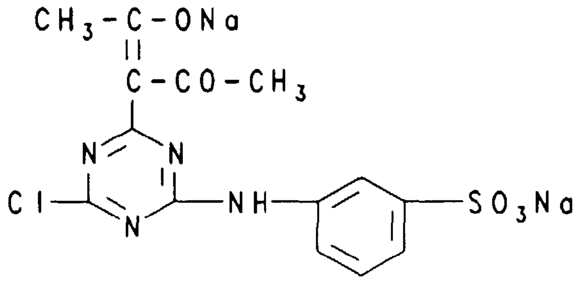

erhalten, die direkt in die weiteren Syntheseschritte zur Herstellung eines erfindungsgemäßen Farbstoffes eingesetzt werden kann (in analoger Weise können andere Aminoderivate hergestellt werden, indem man, wie oben beschrieben, nach der Umsetzung des Cyanurchlorids mit dem Acetylaceton eine andere Anilinsulfonsäure, eine Anilincarbonsäure, Ammoniak oder Taurin einsetzt).

Beispiel A-3

Zu der gemäß Beispiel A-1 erhaltenen Lösung des Umsetzungsproduktes aus Cyanurchlorid und Acetessigsäurethylester gibt man 73 Teile Diethylamin und führt die zweite Kondensationsreaktion bei einem pH-Wert zwischen 7 und 8 und einer Temperatur von etwa 20°C durch. Man erhält die Verbindung der Formel

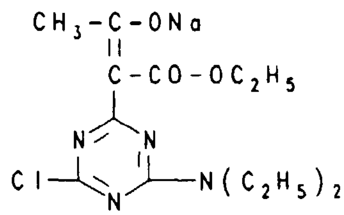

die zur Synthese der erfindungsgemäßen Farbstoffe eingesetzt werden kann.

Beispiel 1

Zu einer Suspension von 18,5 Teilen Cyanurchlorid in 200 Teilen Eiswasser gibt man 17,35 Teile Anilin-3-sulfonsäure. Die Umsetzung erfolgt bei einem pH-Wert zwischen 1,5 und 2 und bei der Temperatur von etwa 0°C während etwa zwei Stunden. Danach gibt man 8,8 Teile Morpholin hinzu und führt die zweite Kondensationsreaktion bei einem pH-Wert zwischen 6 und 6,5 und einer Temperatur zwischen 0 und 5°C während etwa drei Stunden durch. Anschließend gibt man 30,5 Teile 1-Amino-8-hydroxy-naphthalin-3,6-disulfonsäure hinzu; die dritte Kondensationsreaktion wird bei etwa 80°C und einem pH-Wert zwischen 3 und 3,5 während etwa drei Stunden durchgeführt.

Zu der so hergestellten Kupplungskomponente gibt man eine auf üblichem Wege hergestellte wäßrige, salzsaure-Diazoniumsalzlösung aus 28,35 Teilen 4-(β-Sulfatoethylsulfonyl)-anilin; die Kupplungsreaktion erfolgt bei einem pH-Wert von 4 bis 5 und einer Temperatur zwischen 10 und 20°C.

Der erfindungsgemäße Azofarbstoff wird in üblicher Weise isoliert, beispielsweise durch Aussalzen mit Natriumchlorid. Er besitzt, in Form der freien Säure geschrieben, die Formel

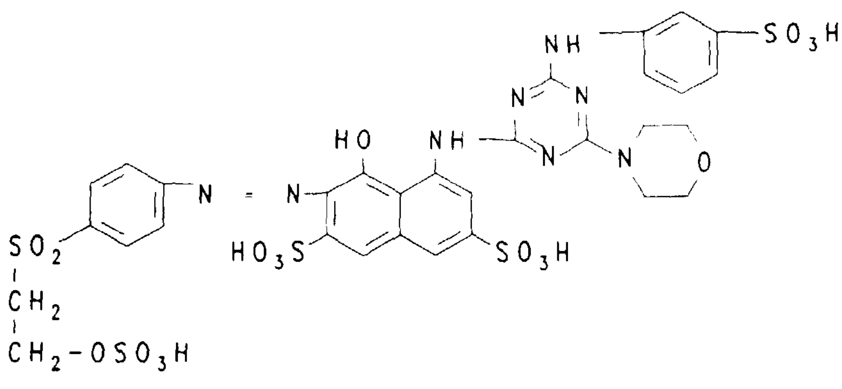

($\lambda_{max}$ = 519 nm).

Der erfindungsgemäße Monoazofarbstoff besitzt sehr gute faserreaktive Farbstoffeigenschaften und färbt die in der Beschreibung genannten Materialien, wie insbesondere Cellulosefasermateralien, in farbstarken, echten roten Tönen.

Beispiel 2

Zu einer Suspension von 36,8 Teilen Cyanurchlorid in 400 Teilen Eiswasser gibt man 34,65 Teile Anilin-3-sulfonsäure und führt die Umsetzung während etwa zwei Stunden bei einem pH-Wert zwischen 1,5 und 2 und einer Temperatur von etwa 0°C durch. Anschließend gibt man 21,5 Teile Diethanolamin hinzu und führt die zweite Kondensationsreaktion bei einer Temperatur zwischen 10 und 20°C unter Einhaltung eines pH-Wertes von 7 bis 8 mittels konzentrierter Natronlauge durch. Die dritte Kondensationsreaktion erfolgt mit 57,4 Teilen 1-Amino-8-hydroxynaphthalin-3,6-disulfonsäure bei einer Temperatur von etwa 60°C und einem pH-Wert zwischen 2 und 2,5 während etwa zwei Stunden.

Die so erhaltene Kupplungskomponente versetzt man, analog den Angaben des Beispiels 1, mit der äquivalenten Menge des Diazoniumsalzes von 4-(β-Sulfatoethylsulfonyl)-anilin und führt die Kupplungsreaktion und die Isolierung des erhaltenden erfindungsgemäßen Monoazofarbstoffes gemäß den Angaben des Beispieles 1 durch.

Man erhält den erfindungsgemäßen Monoazofarbstoff der Formel (in Form der freien Säure)

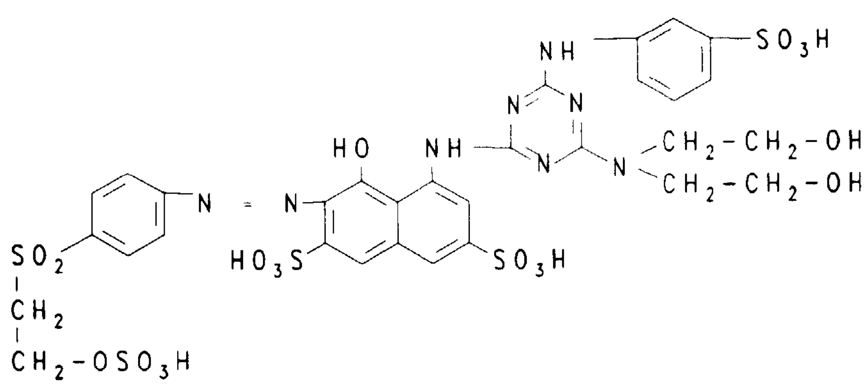

($\lambda_{max}$ = 521 nm),

mit welchem farbstarke, echte, rote Färbungen und Drucke erhalten werden.

Beispiele 3 bis 46

In den nachstehenden Tabellenbeispielen sind weitere erfindungsgemäße Azofarbstoffe mit Hilfe der Komponenten entsprechend der allgemeinen Formel (A)

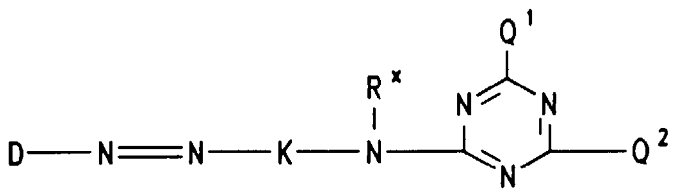

(A)

beschrieben. Sie lassen sich in erfindungsgemäßer Weise, beispielsweise analog einem der obigen Ausführungsbeispiele, unter Einsatz der aus dem jeweiligen Tabellenbeispiel in Verbindung mit der allgemeinen Formel (A) ersichtlichen Komponenten (wie der Diazokomponente $D\text{-}NH_2$ der Kupplungskomponente $H\text{-}K\text{-}NR^xH$, einem Halogentriazin, eine Verbindung der Formel $H\text{-}Q^1$ und eine Verbindung der Formel $H\text{-}Q^2$) herstellen. Sie besitzen sehr gute faserreaktive Farbstoffeigenschaften und färben die in der Beschreibung genannten Materialien, insbesondere Cellulosefasermaterialien, wie Baumwolle, in den in dem jeweiligen Tabellenbeispiel (hierfür Baumwolle) angegebenen Tönen in hoher Farbstärke und mit guten Echtheiten.

| Bsp. | Rest D- | Rest -K-N($R^x$)- | Rest -$Q^1$ | Rest -$Q^2$ | Farbton |
|---|---|---|---|---|---|
| 3 | 4-(ß-Sulfatoethylsulfonyl)-phenyl | 8-Hydroxy-3,6-disulfo-naphthylen(7,1)-1-amino | (Ethoxycarbonyl)-(acetyl)-methyl | 4-Sulfo-phenylamino | rot (515) |
| 4 | 2,5-Dimethoxy-4-(ß-sulfatoethylsulfonyl)-phenyl | dito | (Ethoxycarbonyl)-(acetyl)-methyl | 3-Sulfo-phenylamino | bordo (535) |
| 5 | 4-(ß-Sulfatoethylsulfonyl)-phenyl | 8-Hydroxy-4,6-disulfo-naphthylen(7,1)-1-amino | (Ethoxycarbonyl)-(acetyl)-methyl | 4-Sulfo-phenylamino | rot |
| 6 | 6-(ß-Sulfatoethylsulfonyl)-1-sulfo-naphth-2-yl | dito | (Ethoxycarbonyl)-(acetyl)-methyl | 3-Sulfo-phenylamino | rot |
| 7 | dito | dito | 3-Sulfo-phenylamino | 1-Carboxy-ethyl-1-amino | rot |
| 8 | dito | dito | 3-Carboxy-phenylamino | 4-Sulfo-phenylamino | rot |
| 9 | 4-(ß-Sulfatoethylsulfonyl)-phenyl | 8-Hydroxy-6-sulfo-naphthylen(7,3)-3-amino | (Ethoxycarbonyl)-(acetyl)-methyl | 3-Carboxy-phenylamino | orange (474) |
| 10 | dito | 8-Hydroxy-6-sulfo-naphthylen(7,2)-2-amino | (Ethoxycarbonyl)-(acetyl)-methyl | 3-Carboxy-phenylamino | rotorange |
| 11 | dito | dito | 3-Carboxy-phenylamino | 4-Sulfo-phenylamino | rotorange |

| Bsp. | Rest D- | Rest -K-N($R^x$)- | Rest -$Q^1$ | Rest -$Q^2$ | Farbton |
|---|---|---|---|---|---|
| 12 | 6-(ß-Sulfatoethylsulfonyl)-1-sulfo-naphth-2-yl | dito | (Ethoxycarbonyl)-(acetyl)-methyl | 3-Carboxy-phenylamino | rotorange |
| 13 | dito | dito | 3-Carboxy-phenylamino | 4-Sulfo-phenylamino | rotorange |
| 14 | 6-(ß-Sulfatoethylsulfonyl)-1-sulfo-naphth-2-yl | 8-Hydroxy-6-sulfo-naphthylen(7,3)-3-amino | (Ethoxycarbonyl)-(acetyl)-methyl | 3-Carboxy-phenylamino | orange (479) |
| 15 | dito | dito | 3-Sulfo-phenylamino | 1-Carboxy-ethyl-1-amino | orange (485) |
| 16 | 3-(ß-Sulfatoethylsulfonyl)-phenyl | dito | (Ethoxycarbonyl)-(acetyl)-methyl | 3-Sulfo-phenylamino | orange |
| 17 | dito | dito | 3-Carboxy-phenylamino | 4-Sulfo-phenylamino | orange |
| 18 | 6-(ß-Sulfatoethylsulfonyl)-1-sulfo-naphth-2-yl | 8-Hydroxy-4,6-disulfo-naphthylen(7,1)-1-amino | ß-Hydroxyethyl-thio | 3-Sulfo-phenylamino | rot |
| 19 | 2,5-Dimethoxy-4-(ß-sulfatoethylsulfonyl)-phenyl | dito | (Ethoxycarbonyl)-(acetyl)-methyl | 4-Sulfo-phenylamino | rot |
| 20 | 8-(ß-Sulftoethylsulfonyl)-6-sulfo-naphth-2-yl | dito | (Ethoxycarbonyl)-(acetyl)-methyl | 3-Sulfo-phenylamino | rot |
| 21 | dito | dito | 3-Carboxy-phenylamino | 4-Sulfo-phenylamino | rot |

| Bsp. | Rest D- | Rest -K-N($R^x$)- | Rest -$Q^1$ | Rest -$Q^2$ | Farbton |
|---|---|---|---|---|---|
| 22 | 4-(ß-Sulfatoethylsulfonyl)-phenyl | 3-Sulfo-phenylen(6,1)-1-amino | (Ethoxycarbonyl)-(acetyl)-methyl | 3-Sulfo-phenylamino | goldgelb (417) |
| 23 | dito | dito | dito | 4-Sulfo-phenylamino | goldgelb (417) |
| 24 | 2,5-Dimethoxy-4-(ß-sulfatoethylsulfonyl)-phenyl | dito | 3-Sulfo-phenylamino | 3-Carboxy-phenylamino | orange |
| 25 | 4-(ß-Sulfatoethyl-sulfonyl)-phenyl | 8-Hydroxy-3,6-disulfo-naphthylen(7,1)-1-amino | 4-Sulfo-phenylamino | N-Morpholino | rot (519) |
| 26 | dito | dito | dito | N-(ß-Hydroxyethyl)-amino | rot (520) |
| 27 | dito | dito | dito | N,N-Di-(ß-hydroxyethyl)-amino | rot (521) |
| 28 | dito | dito | 3-Sulfo-phenylamino | N-(ß-Hydroxyethyl)-amino | rot (518) |
| 29 | dito | dito | dito | Amino | rot (517) |
| 30 | dito | dito | 4-Sulfo-phenylamino | Amino | rot (518) |
| 31 | 6-(ß-Sulfatoethylsulfonyl)-1-sulfo-naphth-2-yl | dito | dito | dito | blaustichig rot (538) |

| Bsp. | Rest D- | Rest -K-N($R^x$)- | Rest -$Q^1$ | Rest -$Q^2$ | Farbton |
|---|---|---|---|---|---|
| 32 | dito | dito | dito | N-(ß-Hydroxyethyl)-amino | blausichtig rot (539) |
| 33 | dito | dito | dito | N-Morpholino | blaustichig rot (540) |
| 34 | dito | dito | dito | N,N-Di-(ß-hydroxyethyl)-amino | blaustichig rot (538) |
| 35 | dito | dito | dito | N-Morpholino | blaustichig rot (537) |
| 36 | dito | dito | 3-Carboxy-phenylamino | dito | blaustichig rot (538) |
| 37 | 4-(ß-Sulfatoethylsulfonyl)-phenyl | dito | (Ethoxycarbonyl)-(acetyl)-methyl | Diethylamino | rot (521) |
| 38 | 2,5-Dimethoxy-4-(ß-sulfatoethylsulfonyl)-phenyl | dito | (Ethoxycarbonyl)-(acetyl)-methyl | 3-Sulfo-phenylamino | bordo (535) |
| 39 | 4-(ß-Sulfatoethylsulfonyl)-phenyl | 8-Hydroxy-4,6-disulfo-naphthylen(7,1)-1-amino | (Ethoxycarbonyl)-(acetyl)-methyl | 3-Sulfo-phenylamino | rot |
| 40 | 6-(ß-Sulfatoethylsulfonyl)-1-sulfo-naphth-2-yl | dito | (Ethoxycarbonyl)-(acetyl)-methyl | 3-Sulfo-phenylamino | rot |
| 41 | dito | dito | 3-Sulfo-phenylamino | 1-Carboxy-ethyl-1-amino | rot |

| Bsp. | Rest D- | Rest -K-N($R^x$)- | Rest -$Q^1$ | Rest -$Q^2$ | Farbton |
|---|---|---|---|---|---|
| 42 | dito | dito | 3-Carboxy-phenylamino | 4-Sulfo-phenylamino | rot |
| 43 | 4-(ß-Sulfatoethylsulfonyl)-phenyl | 8-Hydroxy-6-sulfo-naphthylen(7,3)-3-amino | (Ethoxycarbonyl)-(acetyl)-methyl | 3-Carboxy-phenylamino | orange |
| 44 | dito | dito | 3-Carboxy-phenylamino | 3-Sulfo-phenylamino | rotorange |
| 45 | 6-(ß-Sulfatoethylsulfonyl)-1-sulfo-naphth-2-yl | 8-Hydroxy-6-sulfo-naphthylen(7,3)-3-amino | (Ethoxycarbonyl)-(acetyl)-methyl | 3-Carboxy-phenylamino | orange |
| 46 | dito | dito | 3-Sulfo-phenylamino | 1-Carboxy-ethyl-1-amino | orange |

**Patentansprüche**

1. Farbstoff entsprechend der allgemeinen Formel (1)

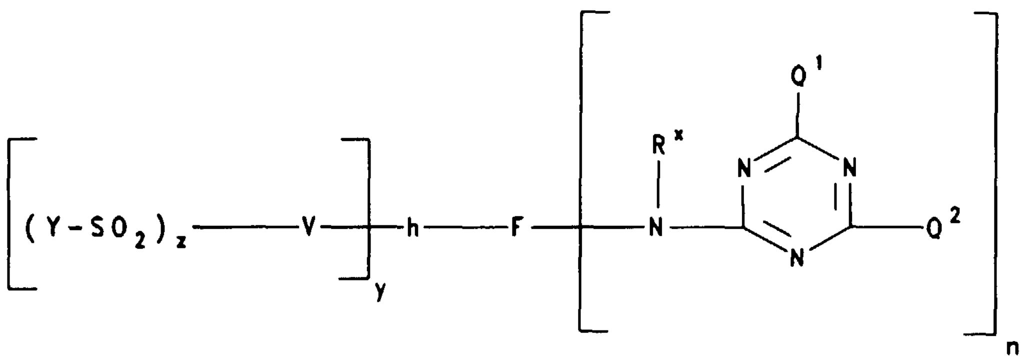

(1)

in welcher bedeuten:

| | |
|---|---|
| F | ist der Rest eines Monoazo-, Disazo- oder Polyazofarbstoffes oder eines davon abgeleiteten Schwermetallkomplex-Azofarbstoffes oder eines Anthrachinon-, Phthalocyanin-, Formazan-, Azomethin-, Dioxazin-, Phenazin-, Stilben-, Triphenylmethan-, Xanthen-, Thioxanthen-, Nitroaryl-, Naphthochinon-, Pyrenchinon- oder Perlyentetracarbimid-Farbstoffes; |
| $R^x$ | ist ein Wasserstoffatom oder eine Alkylgruppe von 1 bis 4 C-Atomen, die durch Halogen, Hydroxy, Cyano, Alkoxy von 1 bis 4 C-Atomen, Alkoxycarbonyl von 2 bis 5 C-Atomen, Carboxy, Sulfamoyl, Sulfo oder Sulfato substituiert sein kann; |
| n | ist die Zahl 1 oder 2; |
| V | ist eine direkte Bindung oder eine Alkylengruppe oder ist ein gegebenenfalls substituierter Arylenrest oder ein Alkylen-arylen- oder Arylen-alkylen- oder Alkylen-arylen-alkylen- oder Arylen-alkylen-arylen-Rest oder ein durch eine Heterogruppe unterbrochener Arylen-arylen-Rest, wobei die Alkylenreste solche von 1 bis 8 C-Atomen sind und substituiert sein können und die Arylenreste gegebenenfalls substituierte Phenylen- oder Naphthylenreste sind, und wobei die Alkylenreste durch 1 oder mehrere Heterogruppen unterbrochen sein können und die Alkylen- und Arylenanteile in den kombinierten Alkylen/Arylen-Resten jeweils durch eine Heterogruppe voneinander getrennt sein können; |
| y | ist die Zahl 1 oder 2; |
| z | ist die Zahl 1 oder 2; |
| h | ist im Falle von y gleich 2 ein N-Atom oder im Falle von y gleich 1 eine Gruppe der Formel -NH- , -N(R)- mit R einer der obengenannten Bedeutungen, -NH-CO-NH-, -NH-CO- oder -CO-NH- oder eine direkte Bindung; |
| Y | ist die Vinylgruppe oder ist eine Ethylgruppe, die in β-Stellung einen alkalisch eliminierbaren Substituenten enthält, wobei die Gruppe(n) $-SO_2-Y$ über einen Alkylenrest von 1 bis 4 C-Atomen oder über eine Alkylaminogruppe von 1 bis 4 C-Atomen an ein aromatisches Kohlenstoffatom von F oder V gebunden sein kann (können); |
| $Q^1$ und $Q^2$ | sind beide mit zueinander gleicher oder voneinander verschiedener Bedeutung jedes Alkyl von 1 bis 4 C-Atomen, das durch 1 oder 2 Alkanoylgruppen von 2 bis 5 C-Atomen oder durch 1 oder 2 Alkoxycarbonylgruppen von 2 bis 5 C-Atomen oder durch eine dieser Alkoxycarbonyl- und eine dieser Alkanoylgruppen substituiert ist, oder eine Gruppe der allgemeinen Formel (2A) |

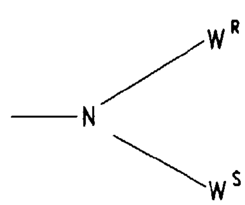

(2A)

in welcher

$W^R$ Wasserstoff, Alkyl von 1 bis 4 C-Atomen oder Alkyl von 1 bis 4 C-Atomen ist, das durch Sulfo, Carboxy, Phosphato, Sulfato, Hydroxy, Cyano, Alkoxy von 1 bis 4 C-Atomen, Phenyl oder durch Substituenten aus der Gruppe Sulfo, Carboxy, Alkyl von 1 bis 4 C-Atomen, Alkoxy von 1 bis 4 C-Atomen, Chlor und Nitro substituiertes Phenyl substituiert ist, oder Cycloalkyl von 5 bis 8 C-Atomen ist,

$W^S$ Wasserstoff, Alkyl von 1 bis 4 C-Atomen oder Alkyl von 1 bis 4 C-Atomen ist, das durch Sulfo, Carboxy, Phosphato, Sulfato, Hydroxy, Cyano, Alkoxy von 1 bis 4 C-Atomen, Phenyl oder durch Substituenten aus der Gruppe Sulfo, Carboxy, Alkyl von 1 bis 4 C-Atomen, Alkoxy von 1 bis 4 C-Atomen, Chlor und Nitro substituiertes Phenyl substituiert ist, oder Phenyl ist, das durch 1, 2 oder 3 Substituenten aus der Gruppe Alkyl von 1 bis 4 C-Atomen, Alkoxy von 1 bis 4 C-Atomen, Chlor, Sulfo, Carboxy und Nitro substituiert sein kann, oder

$W^R$ und $W^S$ zusammen mit dem N-Atom einen aus einem Alkylenrest von 3 bis 8 C-Atomen oder einen aus einer weiteren Heterogruppe und zwei Alkylenresten von 1 bis 4 C-Atomen aufgebauten heterocyclischen Rest bilden.

**2.** Farbstoff nach Anspruch 1, dadurch gekennzeichnet, daß der Rest der Formel (3)

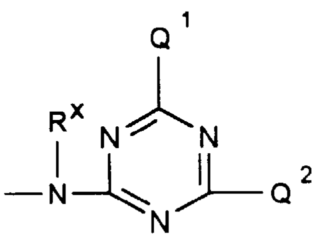

(3)

ein Rest der allgemeinen Formel (3a)

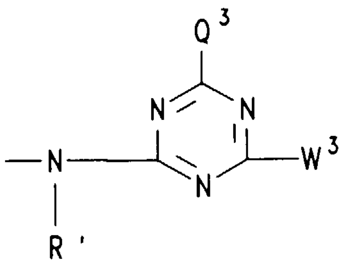

(3a)

ist, in welcher

R' Methyl oder Ethyl oder bevorzugt Wasserstoff ist,

$Q^3$ eine Aminogruppe der allgemeinen Formel $-NT^1T^2$ ist, in welcher

$T^1$ Wasserstoff oder Alkyl von 1 bis 4 C-Atomen ist, das durch Hydroxy, Alkoxy von 1 bis 4 C-Atomen, Sulfo, Carboxy, Sulfato, Phosphato, Phenyl und sulfosubstituiertes Phenyl substituiert sein kann, und

$T^2$ Wasserstoff oder Alkyl von 1 bis 4 C-Atomen ist, das durch Hydroxy, Alkoxy von 1 bis 4 C-Atomen, Sulfo, Carboxy, Sulfato, Phosphato, Phenyl und sulfosubstituiertes Phenyl substituiert sein kann, oder Phenyl ist, das durch 1 oder 2 Substituenten aus der Gruppe Alkoxy von 1 bis 4 C-Atomen, Alkyl von 1 bis 4 C-Atomen, Sulfo und Carboxy substituiert sein kann, und

$W^3$ eine Aminogruppe der allgemeinen Formel $-NT^3T^4$ ist, in welcher

$T^3$ Wasserstoff oder Alkyl von 1 bis 4 C-Atomen ist, das durch Hydroxy, Alkoxy von 1 bis 4 C-Atomen, Sulfo, Carboxy, Sulfato, Phosphato, Phenyl und sulfosubstituiertes Phenyl substituiert sein kann, und

$T^4$ Wasserstoff oder Alkyl von 1 bis 4 C-Atomen ist, das durch Hydroxy, Alkoxy von 1 bis 4 C-Atomen, Sulfo, Carboxy, Sulfato, Phosphato, Phenyl und sulfosubstituiertes Phenyl substituiert sein kann, oder Phenyl

ist, das durch 1 oder 2 Substituenten aus der Gruppe Alkoxy von 1 bis 4 C-Atomen, Alkyl von 1 bis 4 C-Atomen, Sulfo und Carboxy substituiert sein kann.

**3.** Farbstoff nach Anspruch 1 der allgemeinen Formel (4e)

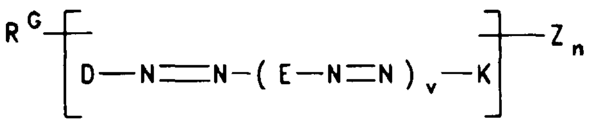

(4e)

in welcher

$R^G$ eine Gruppe der allgemeinen Formel (5)

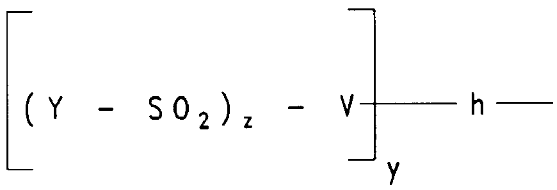

(5)

mit Y, V, h, z und y den in Anspruch 1 genannten Bedeutungen ist,

Z ein Rest der allgemeinen Formel (3) oder (3a)

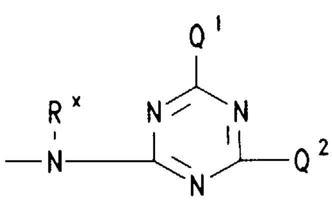

(3)

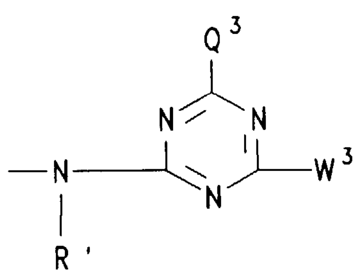

(3a)

ist, in welchen die einzelnen Formelglieder die in Anspruch 1 bzw. Anspruch 2 genannten Bedeutungen haben,

n die Zahl 1 oder 2 ist,

der Rest Z an den Rest D oder den Rest K oder im Falle von n = 2 jeweils an D und K gebunden ist, wobei $R^G$ und Z nicht gleichzeitig an D und K gebunden sind,

D für den Rest einer Diazokomponente, an die noch ein Azorest gebunden sein kann, steht,
E den bivalenten Rest einer kupplungsfähigen und diazotierbaren Verbindung bedeutet,
K den Rest einer Kupplungskomponente, an die noch ein Azorest gebunden sein kann, darstellt und
v für die Zahl Null oder 1 steht.

**4.** Farbstoff nach Anspruch 1 der allgemeinen Formel (4f)

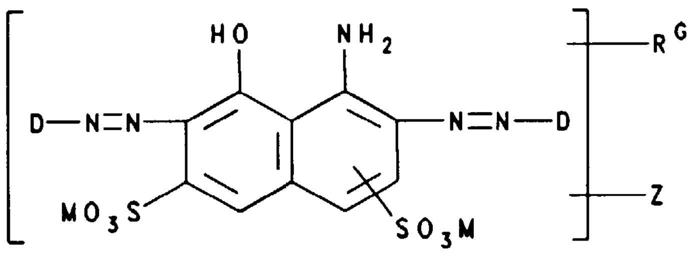

(4f)

in welcher

D jedes, unabhängig voneinander, der Rest einer Diazokomponente ist, an die noch ein Azorest gebunden sein kann,
$R^G$ eine Gruppe der in Anspruch 3 genannten und definierten allgemeinen Formel (5) ist und an das eine D gebunden ist,
Z einen in Anspruch 3 genannten und definierten Rest der allgemeinen Formel (3) oder (3a) ist und an das andere D gebunden ist, und
M ein Wasserstoffatom oder ein Alkalimetall ist.

**5.** Farbstoff nach Anspruch 1 der allgemeinen Formel (4g)

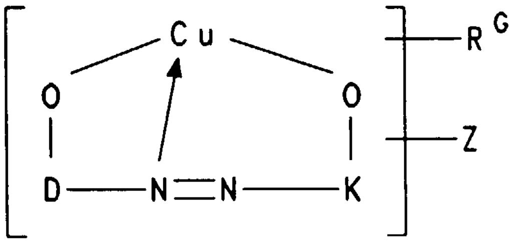

(4g)

in welcher

$R^G$ ein in Anspruch 3 genannter und definierter Rest der allgemeinen Formel (5) ist und an D oder K gebunden ist,
Z ein in Anspruch 3 genannter und definierter Rest der allgemeinen Formel (3) oder (3a) ist und an D oder K gebunden ist, wobei $R^G$ und Z nicht gleichzeitig an D und K gebunden sind,
D für den Rest einer Diazokomponente steht, an die noch ein Azorest gebunden sein kann, und
K den Rest einer Kupplungskomponente, an die noch ein Azorest gebunden sein kann, darstellt.

**6.** Farbstoff nach mindestens einem der Ansprüche 1 bis 5, dadurch gekennzeichnet, daß $R^x$ Methyl, Ethyl oder bevorzugt Wasserstoff ist.

**7.** Farbstoff nach mindestens einem der Ansprüche 1 bis 6, dadurch gekennzeichnet, daß n 1 ist.

**8.** Farbstoff nach mindestens einem der Ansprüche 1 bis 7, dadurch gekennzeichnet, daß V und h jedes eine direkte Bindung bedeuten.

**9.** Farbstoff nach Anspruch 1, worin

| | |
|---|---|
| F | der Rest eines Farbstoffes, bevorzugt eines Monoazo-, Disazo- oder Polyazofarbstoffes oder eines davon abgeleiteten Schwermetallkomplex-Azofarbstoffes, ist, |
| Y, z, $R^x$, $Q^1$ und $Q^2$ | die obengenannten, insbesondere bevorzugten Bedeutungen haben, |
| n | die Zahl 1 bedeutet, |
| y | die Zahl 1 ist, |

V und h beide eine direkte Bindung darstellen und

die Gruppe(n) -$SO_2$-Y direkt oder über einen Alkylenrest von 1 bis 4 C-Atomen oder über eine Alkylaminogruppe von 1 bis 4 C-Atomen an ein aromatisches Kohlenstoffatom von F gebunden ist (sind).

**10.** Farbstoff nach Anspruch 1 oder 9, dadurch gekennzeichnet, daß $Q^1$ und $Q^2$, zueinander gleich oder voneinander verschieden, jedes einen Rest der allgemeinen Formel (2A) bedeutet.

**11.** Farbstoff nach Anspruch 1 der allgemeinen Formel (4h)

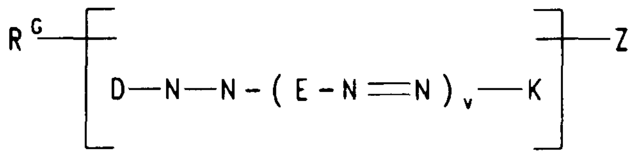

(4h)

in welcher

$R^G$ an D und Z an K oder $R^G$ an K und Z an D gebunden ist,
$R^G$ eine Gruppe der allgemeinen Formel (5A)

$$(Y - SO_2)_z— \qquad (5A)$$

mit Y und Z den in Anspruch 1 genannten Bedeutungen ist,
Z ein Rest der allgemeinen Formel (3)

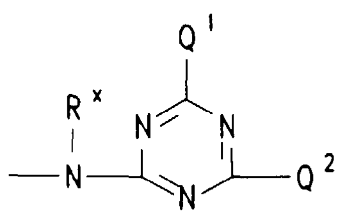

(3)

ist, in welcher $R^x$, $Q^1$ und $Q^2$ die in Anspruch 1 genannten Bedeutungen haben,
D für den Rest einer Diazokomponente, an die noch ein Azorest gebunden sein kann, steht,
E den bivalenten Rest einer kupplungsfähigen und diazotierbaren Verbindung bedeutet,
K den Rest einer Kupplungskomponente, an die noch ein Azorest gebunden sein kann, darstellt und
v für die Zahl Null oder 1 steht.

**12.** Verfahren zur Herstellung eines Farbstoffes von Anspruch 1, dadurch gekennzeichnet, daß man für den jeweiligen Farbstoff typische Vorprodukte, von denen mindestens eines eine Gruppe der in Anspruch 3 genannten und definierten allgemeinen Formel (3) und mindestens eines eine Gruppe der in Anspruch 3 genannten und definierten allgemeinen Formel (5) enthält (wobei bei diesen Ausgangsverbindungen die Gruppe Y im Rest der Formel (5) auch eine Gruppe $Y^1$ nachstehender Bedeutung sein kann), miteinander umsetzt, oder daß man ein Trihalogen-s-triazin der allgemeinen Formel (21)

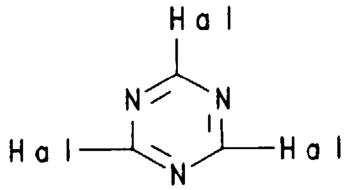

( 2 1 )

in welcher Hal für ein Halogenatom steht, mit einer Verbindung der allgemeinen Formel (20)

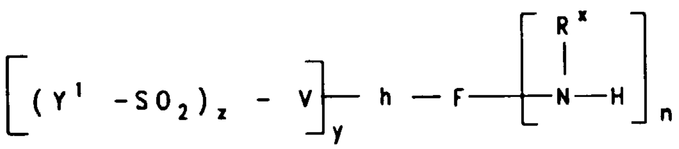

( 2 0 )

in welcher F, $R^x$, V, h, y, z und n die in Anspruch 1 genannten Bedeutungen haben und $Y^1$ eine der oben für Y genannten Bedeutungen besitzt oder die β-Hydroxyethylgruppe ist, einer Verbindung der allgemeinen Formel H-$Q^1$ mit $Q^1$ der in Anspruch 1 genannten Bedeutung und einer Verbindung der allgemeinen Formel H-$Q^2$ mit $Q^2$ der in Anspruch 1 genannten Bedeutung in stöchiometrischen Mengen in beliebiger Reihenfolge umsetzt,
und daß man gegebenenfalls anschließend weitere Umwandlungsreaktionen durchführt.

**13.** Verfahren nach Anspruch 12, dadurch gekennzeichnet, daß man eine Verbindung der allgemeinen Formel (22)

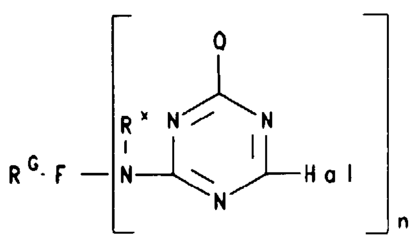

( 2 2 )

in welcher $R^G$ , F, $R^x$ und n die in Anspruch 1 genannte Bedeutungen haben, wobei $R^G$ statt der Gruppe Y-$SO_2$- auch die Gruppe $Y^1$-$SO_2$- enthalten kann, Hal für ein Halogenatom steht und Q den Rest $Q^1$ oder $Q^2$ mit $Q^1$ und $Q^2$ der in Anspruch 1 genannten Bedeutung darstellt, mit einer Verbindung der Formel H-$Q^1$ oder H-$Q^2$ umsetzt, oder daß man eine Verbindung der allgemeinen Formel (20) mit einer Verbindung der allgemeinen Formel (23)

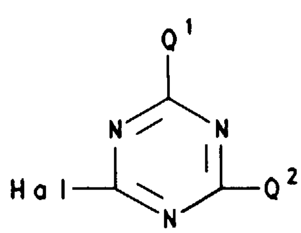

( 2 3 )

mit Hal, $Q^1$ und $Q^2$ der obengenannten Bedeutung umsetzt.

**14.** Verwendung eines Farbstoffes von mindestens einem der Ansprüche 1 bis 11 oder eines nach Anspruch 12 oder 13 hergestellten Farbstoffes zum Färben und Bedrucken von hydroxy- und/oder carbonamidgruppenhaltigem Material, insbesondere Fasermaterial.

**15.** Verfahren zum Färben und Bedrucken von hydroxy- und/oder carbonamidgruppenhaltigem Material, vorzugsweise

Fasermaterial, bei welchem man einen Farbstoff auf das Material aufbringt und den Farbstoff auf dem Material mittels Wärme oder mit Hilfe eines alkalisch wirkenden Mittels oder mittels Wärme und mit Hilfe eines alkalisch wirkenden Mittels fixiert, dadurch gekennzeichnet, daß der Farbstoff ein Farbstoff von mindestens einem der Ansprüche 1 bis 11 oder ein nach Anspruch 12 oder 13 hergestellter Farbstoff ist.

**Claims**

**1.** A dyestuff corresponding to the formula (1)

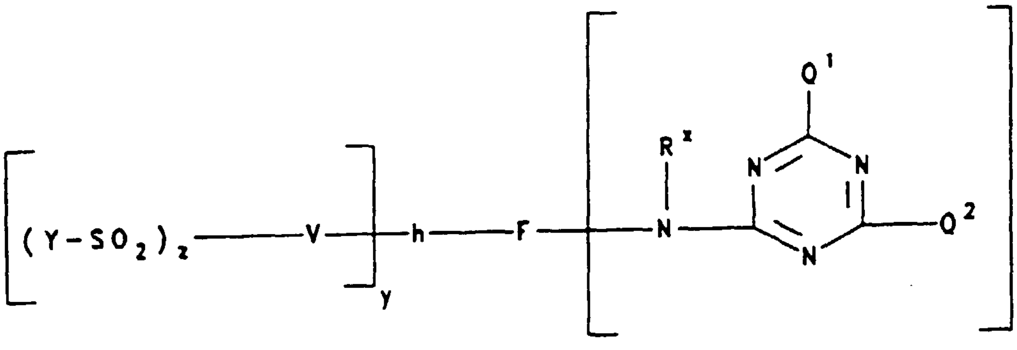

(1)

in which:

| | |
|---|---|
| F | is the radical of a monoazo, disazo or polyazo dyestuff, or of a heavy metal complex azo dye-stuff derived therefrom, or of an anthraquinone, phthalocyanine, formazan, azomethine, dioxazine, phenazine, stilbene, triphenylmethane, xanthene, thioxanthene, nitroaryl, naphthoquinone, pyrenequinone or perylenetetracarbimide dyestuff; |
| $R^x$ | is a hydrogen atom or an alkyl group having 1 to 4 carbon atoms, which can be substituted by halogen, hydroxyl, cyano, alkoxy having 1 to 4 carbon atoms, alkoxycarbonyl having 2 to 5 carbon atoms, carboxyl, sulfamoyl, sulfo or sulfato; |
| n | is the number 1 or 2; |
| V | is a direct bond or an alkylene group, or is an optionally substituted arylene radical or an alkylene-arylene or arylene-alkylene or alkylene-arylene-alkylene or arylene-alkylene-arylene radical, or an arylene-arylene radical which is interrupted by a hetero group, in which the alkylene radicals are those having 1 to 8 carbon atoms and can be substituted and the arylene radicals are optionally substituted phenylene or naphthylene radicals, and in which the alkylene radicals can be interrupted by 1 or more hetero groups and the alkylene and arylene contents in the combined alkylene-arylene radicals in each case can be separated from one another by a hetero group; |
| y | is the number 1 or 2; |
| z | is the number 1 or 2; |
| h | is a nitrogen atom, if y is 2, or, if y is 1, is a group of the formula -NH-, -N(R)-, where R has one of the abovementioned meanings, -NH-CO-NH-, -NH-CO- or -CO-NH-, or a direct bond; |
| Y | is the vinyl group or is an ethyl group, which contains, in the β-position, a substituent which can be eliminated under alkaline conditions, and the group(s) $-SO_2-Y$ can be bonded to an aromatic carbon atom of F or V via an alkylene radical having 1 to 4 carbon atoms or via an alkylamino group having 1 to 4 carbon atoms; |
| $Q^1$ and $Q^2$ | are both, with meanings which are identical to one another or different from one another, each alkyl having 1 to 4 carbon atoms, which is substituted by 1 or 2 alkanoyl groups having 2 to 5 carbon atoms or by 1 or 2 alkoxycarbonyl groups having 2 to 5 carbon atoms or by one of these alkoxycarbonyl and one of these alkanoyl groups, or are a group of the formula (2A) |

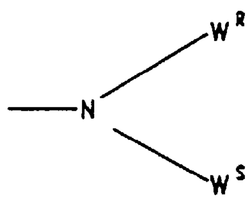

(2A)

in which

- $W^R$ is hydrogen, alkyl having 1 to 4 carbon atoms, or alkyl having 1 to 4 carbon atoms, which is substituted by sulfo, carboxyl, phosphato, sulfato, hydroxyl, cyano, alkoxy having 1 to 4 carbon atoms, phenyl or phenyl which is substituted by substituents from the group consisting of sulfo, carboxyl, alkyl having 1 to 4 carbon atoms, alkoxy having 1 to 4 carbon atoms, chlorine and nitro, or is cycloalkyl having 5 to 8 carbon atoms,
- $W^S$ is hydrogen, alkyl having 1 to 4 carbon atoms, or alkyl having 1 to 4 carbon atoms, which is substituted by sulfo, carboxyl, phosphato, sulfato, hydroxyl, cyano, alkoxy having 1 to 4 carbon atoms, phenyl or phenyl which is substituted by substituents from the group consisting of sulfo, carboxyl, alkyl having 1 to 4 carbon atoms, alkoxy having 1 to 4 carbon atoms, chlorine and nitro, or is phenyl, which can be substituted by 1, 2 or 3 substituents from the group consisting of alkyl having 1 to 4 carbon atoms, alkoxy having 1 to 4 carbon atoms, chlorine, sulfo, carboxyl and nitro, or
- $W^R$ and $W^S$, together with the nitrogen atom, form a heterocyclic radical which is built up from an alkylene radical having 3 to 8 carbon atoms, or a heterocyclic radical which is built up from a further hetero group and two alkylene radicals having 1 to 4 carbon atoms

**2.** A dyestuff as claimed in claim 1, in which the radical of the formula (3)

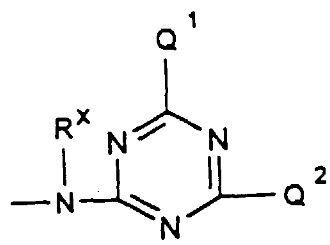

(3)

is a radical of the formula (3a)

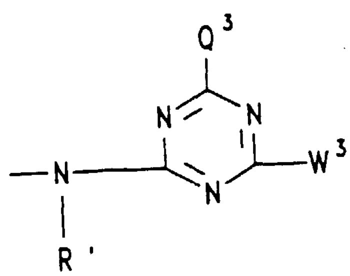

(3a)

in which

- R' is methyl or ethyl or, preferably, hydrogen,
- $Q^3$ is an amino group of the formula $-NT^1T^2$, in which
  - $T^1$ is hydrogen or alkyl having 1 to 4 carbon atoms, which can be substituted by hydroxyl, alkoxy having 1 to 4 carbon atoms, sulfo, carboxyl, sulfato, phosphato, phenyl and sulfo-substituted phenyl, and
  - $T^2$ is hydrogen or alkyl having 1 to 4 carbon atoms, which can be substituted by hydroxyl, alkoxy having 1

to 4 carbon atoms, sulfo, carboxyl, sulfato, phosphato, phenyl and sulfo-substituted phenyl, or is phenyl, which can be substituted by 1 or 2 substituents from the group consisting of alkoxy having 1 to 4 carbon atoms, alkyl having 1 to 4 carbon atoms, sulfo and carboxyl, and

$W^3$ is an amino group of the formula $-NT^3T^4$, in which

$T^3$ is hydrogen or alkyl having 1 to 4 carbon atoms, which can be substituted by hydroxyl, alkoxy having 1 to 4 carbon atoms, sulfo, carboxyl, sulfato, phosphato, phenyl and sulfo-substituted phenyl, and

$T^4$ is hydrogen or alkyl having 1 to 4 carbon atoms, which can be substituted by hydroxyl, alkoxy having 1 to 4 carbon atoms, sulfo, carboxyl, sulfato, phosphato, phenyl and sulfo-substituted phenyl, or is phenyl, which can be substituted by 1 or 2 substituents from the group consisting of alkoxy having 1 to 4 carbon atoms, alkyl having 1 to 4 carbon atoms, sulfo and carboxyl.

**3.** A dyestuff as claimed in claim 1 of the formula (4e)

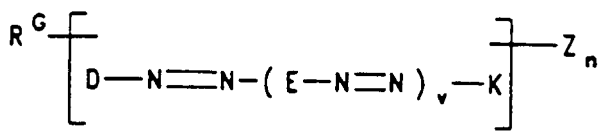

(4e)

in which

$R^G$ is a group of the formula (5)

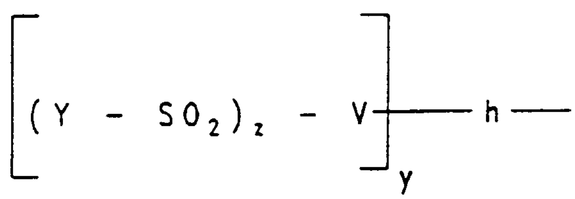

(5)

in which Y, V, h, z and y have the meanings given in claim 1,

Z is a radical of the formula (3) or (3a)

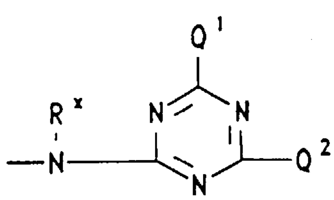

(3)

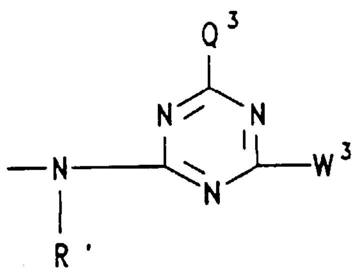

(3a)

in which the individual formula members have the meanings given in claim 1 or claim 2,

n is the number 1 or 2,

the radical Z is bonded to the radical D or to the radical K or, if n is 2, in each case to D and K, $R^G$ and Z not simultaneously being bonded to D and K,

D is the radical of a diazo component, to which a further azo radical can be bonded,
E is the bivalent radical of a diazotizable compound which is capable of coupling,
K is the radical of a coupling component, to which a further azo radical can be bonded, and
v is the number zero or 1.

4. A dyestuff as claimed in claim 1 of the formula (4f)

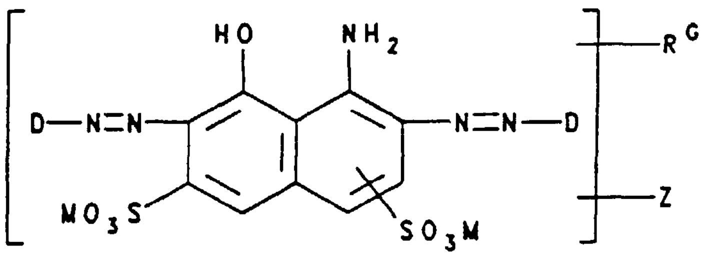

(4f)

in which

D in each case, independently of one another, is the radical of a diazo component, to which a further azo radical can be bonded,
$R^G$ is a group of the formula (5) mentioned and defined in claim 3, and is bonded to one D,
Z is a radical of the formula (3) or (3a) mentioned and defined in claim 3, and is bonded to the other D, and
M is a hydrogen atom or an alkali metal.

5. A dyestuff as claimed in claim 1 of the formula (4g)

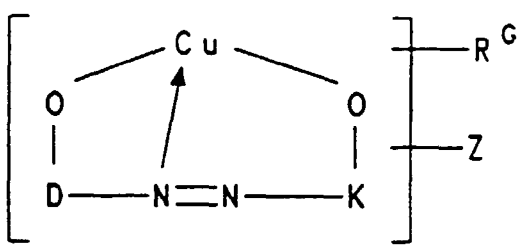

(4g)

in which

$R^G$ is a radical of the formula (5) mentioned and defined in claim 3, and is bonded to D or K,
Z is a radical of the formula (3) or (3a) mentioned and defined in claim 3, and is bonded to D or K, $R^G$ and Z not simultaneously being bonded to D and K,
D is the radical of a diazo component, to which a further azo radical can be bonded, and
K is the radical of a coupling component, to which a further azo radical can be bonded.

6. A dyestuff as claimed in at least one of claims 1 to 5, in which $R^x$ is methyl, ethyl or, preferably, hydrogen.

7. A dyestuff as claimed in at least one of claims 1 to 6, in which n is 1.

8. A dyestuff as claimed in at least one of claims 1 to 7, in which V and h are each a direct bond.

9. A dyestuff as claimed in claim 1, in which

F is the radical of a dyestuff, preferably of a monoazo, disazo or polyazo dyestuff, or of a heavy metal complex azo dyestuff derived therefrom,
Y, z, $R^x$, $Q^1$ and $Q^2$ have the abovementioned particularly preferred meanings,
n is the number 1,
y is the number 1,
V and h are both a direct bond and

the group(s) $-SO_2-Y$ is (are) bonded to an aromatic carbon atom of F directly or via an alkylene radical having 1 to 4 carbon atoms or via an alkylamino group having 1 to 4 carbon atoms.

**10.** A dyestuff as claimed in claim 1 or 9, in which $Q^1$ and $Q^2$ are identical to one another or different from one another and are each a radical of the formula (2A).

**11.** A dyestuff as claimed in claim 1 of the formula (4h)

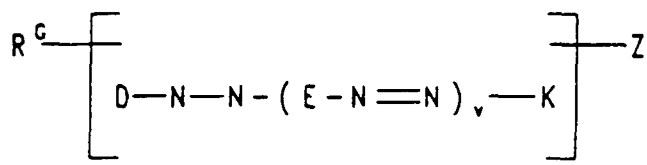

(4h)

in which

$R^G$ is bonded to D and Z is bonded to K, or $R^G$ is bonded to K and Z is bonded to D,
$R^G$ is a group of the formula (5A)

$$(Y - SO_2)_z— \qquad (5A)$$

where Y and Z have the meanings given in claim 1,
Z is a radical of the formula (3)

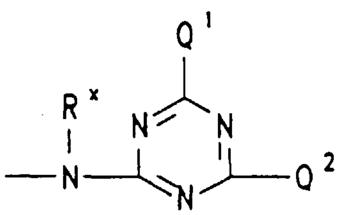

(3)

in which $R^x$, $Q^1$ and $Q^2$ have the meanings given in claim 1,
D is the radical of a diazo component, to which a further azo radical can be bonded,
E is the bivalent radical of a diazotizable compound which is capable of coupling,
K is the radical of a coupling component, to which a further azo radical can be bonded, and
v is the number zero or 1.

**12.** A process for the preparation of a dyestuff of claim 1, which comprises reacting precursors typical of the particular dyestuff, at least one of which contains a group of the formula (3) mentioned and defined in claim 3 and at least one of which contains a group of the formula (5) mentioned and defined in claim 3 (in which, in these starting compounds, the group Y in the radical of the formula (5) can also be a group $Y^1$ having the meaning given below), with one another,
or reacting a trihalo-s-triazine of the formula (21)

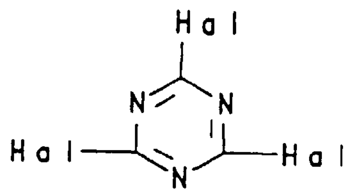

(21)

in which Hal is a halogen atom with a compound of the formula (20)

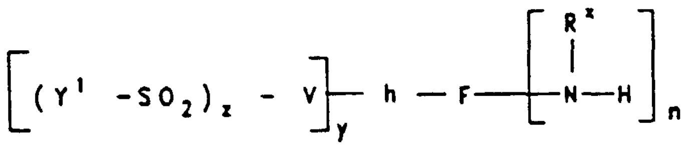

(20)

in which F, $R^x$, V, h, y, z and n have the meanings given in claim 1 and $Y^1$ has one of the meanings given above for Y or is the β-hydroxyethyl group, a compound of the formula H-$Q^1$, where $Q^1$ has the meaning given in claim 1, and a compound of the formula H-$Q^2$, where $Q^2$ has the meaning given in claim 1, in stoichiometric amounts in any desired sequence,
and, if appropriate, subsequently carrying out further conversion reactions.

**13.** The process as claimed in claim 12, wherein a compound of the formula (22)

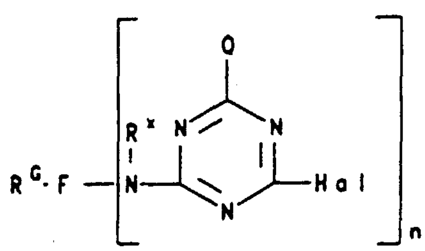

(22)

in which $R^G$, F, $R^x$ and n have the meanings given in claim 1, and in which $R^G$ can also contain the group $Y^1$-$SO_2$-, instead of the group Y-$SO_2$-, Hal is a halogen atom and Q is the radical $Q^1$ or $Q^2$, where $Q^1$ and $Q^2$ have the meaning given in claim 1, is reacted with a compound of the formula H-$Q^1$ or H-$Q^2$, or a compound of the formula (20) is reacted with a compound of the formula (23)

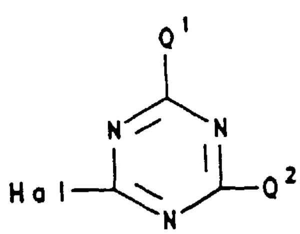

(23)

where Hal, $Q^1$ and $Q^2$ have the abovementioned meaning.

**14.** The use of a dyestuff as claimed in at least one of claims 1 to 11 or of a dyestuff prepared as claimed in claim 12 or 13, for dyeing and printing material containing hydroxyl and/or carboxamide groups, in particular fiber material.

**15.** A process for dyeing and printing material containing hydroxyl and/or carboxamide groups, preferably fiber material, in which a dyestuff is applied to the material and the dyestuff is fixed on the material by means of heat or with the

aid of an agent having an alkaline action or by means of heat and with the aid of an agent having an alkaline action, wherein the dyestuff is a dyestuff as claimed in at least one of claims 1 to 11 or a dyestuff prepared as claimed in claim 12 or 13.

**Revendications**

1. Colorants répondant à la formule générale (1)

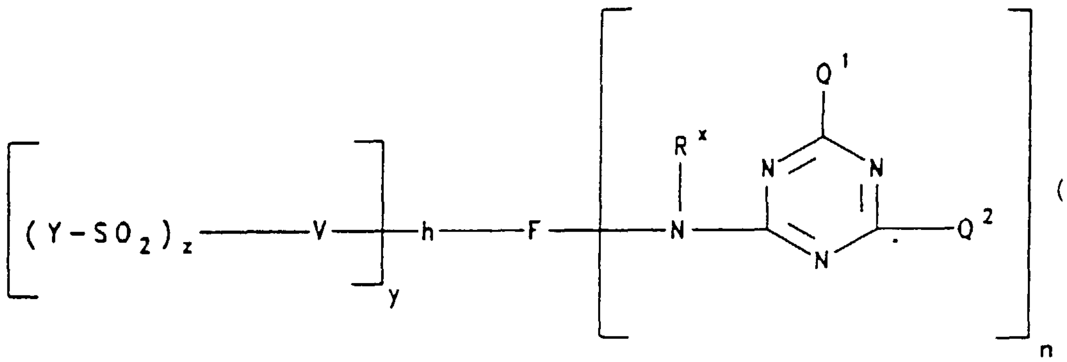

(1)

dans laquelle

F représente le radical d'un colorant monoazoïque, disazoïque ou polyazoïque ou d'un colorant azoïque dérivé à complexe de métal lourd ou d'un colorant d'anthraquinone, de phtalocyanine, de formazane, d'azométhine, de dioxazine, de phénazine, de stilbène, de triphénylméthane, de xanthène, de thioxanthène, de nitroaryle, de naphtoquinone, de pyrènoquinone ou de pérylène-tétracarbimide;

$R^x$ représente un atome d'hydrogène ou un groupe alkyle avec 1 à 4 atomes de carbone qui peut être substitué par halogène, hydroxy, cyano, alcoxy avec 1 à 4 atomes de carbone, alcoxycarbonyle avec 2 à 5 atomes de carbone, carboxy, sulfamoyle, sulfo ou sulfato ;

n vaut 1 ou 2, de préférence 1 ;

V est une liaison directe ou un groupe alkylène ou un radical arylène éventuellement substitué ou un radical alkylène-arylène ou arylène-alkylène ou alkylène-arylène-alkylène ou arylène-alkylène-arylène ou un radical arylène-arylène interrompu par un hétérogroupe, les radicaux alkylène étant des radicaux avec 1 à 8 atomes de carbone et pouvant être substitués et les radicaux arylène étant éventuellement substitués par des radicaux phénylène ou naphtylène, et les radicaux alkylène pouvant être interrompus par un ou plusieurs hétérogroupes et les fragments alkylène et arylène dans leurs radicaux combinés alkylène/arylène pouvant être chaque fois séparés les uns des autres par un hétérogroupe ;

y vaut 1 ou 2 ;

z vaut 1 ou 2 ;

h dans le cas où y vaut 2, représente un atome de N ou dans le cas où y vaut 1 représente un groupe de formule -NH-, -N(R)- avec R ayant les significations données ci-dessus, -NH-CO-NH-, -NH-CO- ou -CO-NH- ou de préférence une liaison directe ;

Y est le groupe vinyle ou un groupe éthyle qui contient en position β un substituant éliminable en milieu alcalin, les groupes $-SO_2-Y$ pouvant être liés par l'intermédiaire d'un radical alkylene avec 1 à 4 atomes de carbone ou par l'intermédiaire d'un groupe alkylamino avec 1 à 4 atomes de carbone à un atome de carbone aromatique de F ou de V ;

$Q^1$ et $Q^2$ sont identiques ou différents, chacun représente alkyle avec 1 à 4 atomes de carbone qui est substitué par 1 ou 2 groupes alcanoyle avec 2 à 5 atomes de carbone, ou par 1 ou 2 groupes alcoxycarbonyle avec 2 à 5 atomes de carbone, ou par un de ces groupes alcoxycarbonyle ou un de ces groupes alcanoylcarbonyle,

ou un groupe de formule générale (2A)

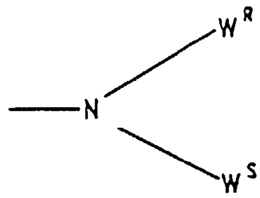

(2A)

dans laquelle

$W^R$ représente l'hydrogène ou alkyle avec 1 à 4 atomes de carbone ou alkyle avec 1 à 4 atomes de carbone substitué par sulfo, carboxy, phosphato, sulfato, hydroxy, cyano, alcoxy avec 1 à 4 atomes de carbone, phényle ou phényle substitué par des substituants pris dans le groupe comportant sulfo, carboxy, alkyle avec 1 à 4 atomes de carbone, alcoxy avec 1 à 4 atomes de carbone, chloro et nitro, représente aussi cycloalkyle avec 5 à 8 atomes de carbone,

$W^S$ représente l'hydrogène, alkyle avec 1 à 4 atomes de carbone ou alkyle avec 1 à 4 atomes de carbone substitué par sulfo, carboxy, phosphato, sulfato, hydroxy, cyano, alcoxy avec 1 à 4 atomes de carbone, phényle ou phényle substitué par des substituants pris dans le groupe comportant sulfo, carboxy, alkyle avec 1 à 4 atomes de carbone, alcoxy avec 1 à 4 atomes de carbone, chloro et nitro, ou représente phényle pouvant être substitué par 1, 2 ou 3 substituants pris dans le groupe comportant alkyle avec 1 à 4 atomes de carbone, alcoxy avec 1 à 4 atomes de carbone , chloro, sulfo, carboxy et nitro, ou

$W^R$ et $W^S$ ensemble avec l'atome de N représentent un radical hétérocyclique constitué d'un radical alkylène avec 3 à 8 atomes de carbone, ou un radical hétérocyclique constitué d'un autre hétérogroupe et de deux radicaux alkylène avec 1 à 4 atomes de carbone.

**2.** Colorant selon la revendication 1, caractérisé en ce que le radical de formule (3)

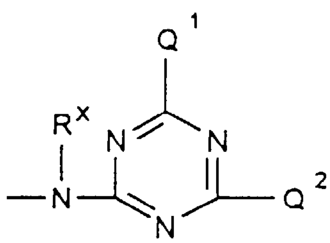

(3)

est un radical de formule générale (3a)

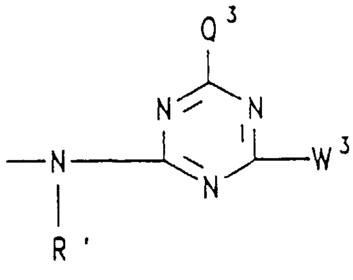

(3a)

dans laquelle

R' représente méthyle ou éthyle ou est de préférence l'hydrogène,

$Q^3$ représente un groupe amino de formule générale $-NT^1T^2$, dans laquelle

$T^1$ représente l'hydrogène ou alkyle avec 1 à 4 atomes de carbone, qui peut être substitué par hydroxy,

alcoxy avec 1 à 4 atomes de carbone, sulfo, carboxy, sulfato, phosphato, phényle et phényle substitué par sulfo, et

$T^2$ représente l'hydrogène ou alkyle avec 1 à 4 atomes de carbone, qui peut être substitué par hydroxy, alcoxy avec 1 à 4 atomes de carbone, sulfo, carboxy, sulfato, phosphato, phényle et phényle substitué par sulfo, ou représente phényle, qui peut être substitué par 1 ou 2 substituants pris dans le groupe comportant alcoxy avec 1 à 4 atomes de carbone, alkyle avec 1 à 4 atomes de carbone, sulfo et carboxy, et

$W^3$ représente un groupe amino de formule générale $-NT^3T^4$, dans laquelle

$T^3$ représente l'hydrogène ou alkyle avec 1 à 4 atomes de carbone, qui peut être substitué par hydroxy, alcoxy avec 1 à 4 atomes de carbone, sulfo, carboxy, sulfato, phosphato, phényle et phényle substitué par sulfo, et

$T^4$ représente l'hydrogène ou alkyle avec 1 à 4 atomes de carbone, qui peut être substitué par hydroxy, alcoxy avec 1 à 4 atomes de carbone, sulfo, carboxy, sulfato, phosphato, phényle et phényle substitué par sulfo, ou représente phényle, qui peut être substitué par 1 ou 2 substituants pris dans le groupe comportant alcoxy avec 1 à 4 atomes de carbone, alkyle avec 1 à 4 atomes de carbone, sulfo et carboxy.

**3.** Colorant selon la revendication 1 de formule générale (4e)

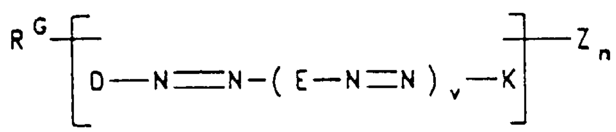

(4e)

dans laquelle

$R^G$ représente un groupe de formule générale (5)

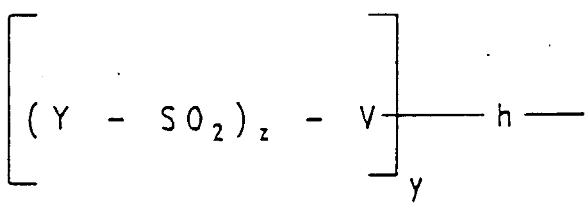

(5)

avec Y, V, h, z et y ayant les significations données dans la revendication 1,

Z représente un radical de formule générale (3) ou (3a)

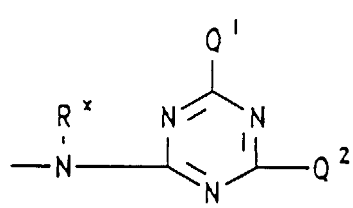

(3)

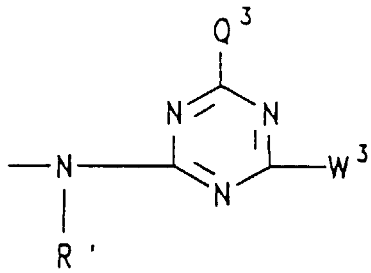

(3a)

dans lesquelles les différents membres de formule ont les significations données dans la revendication 1, respectivement 2,

- n vaut 1 ou 2,

le radical Z est lié au radical D ou au radical K ou, dans le cas de n = 2, il est lié à D et à K, $R^G$ et Z n'étant pas liés simultanément à D et à K,

- D représente le radical d'un composant diazoïque auquel peut être lié encore un radical azo,
- E représente le radical bivalent d'un composé diazotable et copulable,
- K représente le radical d'un composant de copulation auquel peut être lié encore un radical azo et
- v vaut 0 ou 1.

**4.** Colorant selon la revendication 1 de formule générale (4f)

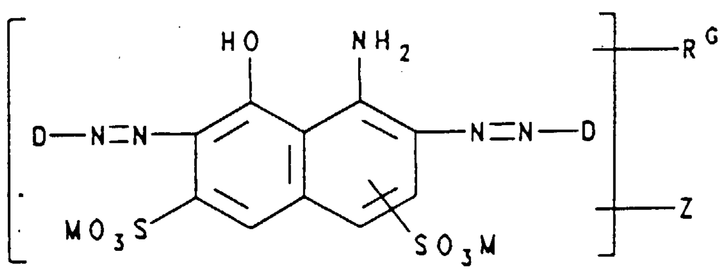

(4f)

dans laquelle

- D chacun, indépendamment l'un de l'autre, représente le radical d'un composant diazoïque auquel peut être lié encore un radical azoïque,
- $R^G$ représente un groupe de formule générale (5) citée et définie dans la revendication (3) et auquel est lié un D,
- Z représente un radical de formule générale (3) ou (3a) citée et définie dans la revendication 3, et auquel est lié l'autre D, et
- M est un atome d'hydrogène ou un métal alcalin.

**5.** Colorant selon la revendication 1 de formule générale (4g)

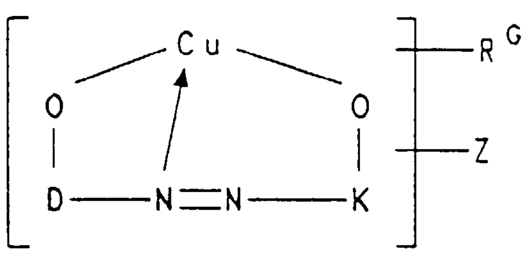

(4g)

dans laquelle

$R^G$ représente un radical de formule générale (5) citée et définie dans la revendication 3 et lequel est lié à D ou à K,
Z représente un radical de formule générale (3) ou (3a) citée et définie dans la revendication 3, et lequel est lié à D ou à K, $R^G$ et Z n'étant pas liés simultanément à D et à K,
D représente le radical d'un composant diazoïque auquel peut être encore lié un radical azoïque, et
K représente le radical d'un composant de copulation auquel peut être encore lié un radical azoïque.

**6.** Colorant selon au moins l'une des revendications 1 à 5, caractérisé en ce que $R^x$ représente méthyle, éthyle ou de préférence l'hydrogène.

**7.** Colorant selon au moins l'une des revendications 1 à 6, caractérisé en ce que n vaut 1.

**8.** Colorant selon au moins l'une des revendications 1 à 7, caractérisé en ce que V et h chacun représentent une liaison directe.

**9.** Colorant selon la revendications , où

| | |
|---|---|
| F | représente le radical d'un colorant, de préférence d'un colorant monoazoïque, disazoïque ou polyazoïque ou d'un colorant azoïque dérivé à complexe de métal lourd, |
| Y, z, $R^x$, $Q^1$ et $Q^2$ | ont les significations données ci-dessus, plus particulièrement les significations préférées, |
| n | vaut 1, |
| y | vaut 1, |
| V et h, | les deux représentent une liaison directe et |

les groupes $-SO_2-Y$ sont liés directement ou par l'intermédiaire d'un radical alkylène avec 1 à 4 atomes de carbone ou par l'intermédiaire d'un groupe alkylamino avec 1 à 4 atomes de carbone au carbone aromatique de F.

**10.** Colorant selon la revendication 1 ou 9, caractérisé en ce que $Q^1$ et $Q^2$, identiques ou différents, représentent chacun un radical de formule générale (2A).

**11.** Colorant selon la revendication 1 de formule générale (4h)

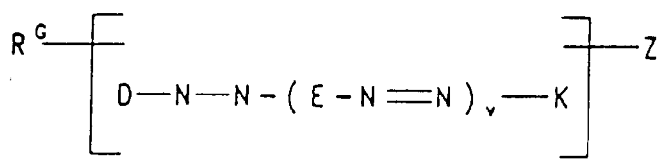

(4h)

dans laquelle

$R^G$ est lié à D et Z est lié à K ou $R^G$ est lié à K et Z est lié à D,
$R^G$ est un groupe de formule générale (5a)

$$(Y—SO_2)_z— \qquad (5A)$$

avec Y et z ayant les significations données dans la revendication 1,
Z représente un radical de formule générale (3)

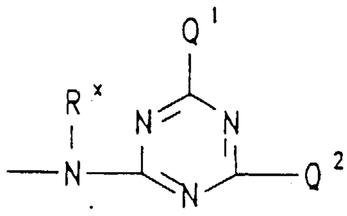

(3)

dans laquelle $R^x$, $Q^1$ et $Q^2$ ont les significations données dans la revendication 1,

D représente le radical d'un composant diazoïque auquel peut être encore lié un radical azo,

E représente le radical bivalent d'un composé copulable et diazotable,

K représente le radical d'un composant de copulation auquel peut être lié encore un radical azo, et

v vaut 0 ou 1.

**12.** Procédé pour la préparation de colorants selon la revendication 1, caractérisé en ce que l'on fait réagir entre eux des précurseurs typiques du colorant concerné dont au moins un contient un groupe de formule générale (3) citée et définie dans la revendication 3 et au moins un un groupe de formule générale (5) citée et définie dans la revendication 3 (dans le cas de ces composés de départ, le groupe Y dans le radical de formule (5) peut être aussi un groupe $Y^1$ ayant la signification donnée ci-après), ou en ce que l'on fait réagir une trihalogéno-s-triazine de formule générale (21)

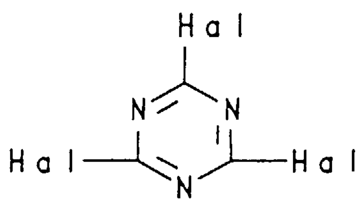

(21)

dans laquelle Hal représente un atome d'halogène, avec un composé de formule générale (20)

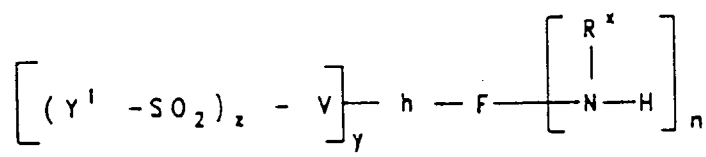

(20)

dans laquelle F, $R^x$, V, h, y, z et n ont les significations données dans la revendication 1 et $Y^1$ a l'une des significations données ci-dessus pour Y, ou est le groupe β-hydroxyéthyle, d'un composé de formule générale H-$Q^1$ avec $Q^1$ ayant la signification donnée dans la revendication 1, et d'un composé de formule générale H-$Q^2$ avec $Q^2$ ayant la signification donnée dans la revendication 1, en quantités stoechiométriques, dans un ordre quelconque, et en ce que, éventuellement, on met en oeuvre d'autres réactions de transformation. .

**13.** Procédé selon la revendication 12, caractérisé en ce que l'on fait réagir un composé de formule générale (22)

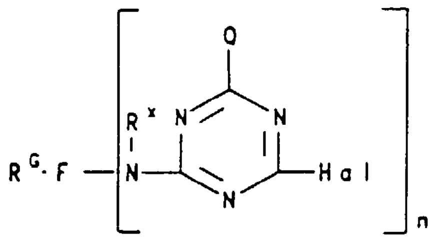

(22)

dans laquelle $R^G$, F, $R^x$ et n ont les significations données dans la revendication 1, $R^G$ peut contenir au lieu du groupe Y-$SO_2$- également le groupe $Y^1$-$SO_2$-, Hal représente un atome d'halogène, et Q représente le radical $Q^1$ ou $Q^2$, avec $Q^1$ et $Q^2$ ayant les significations données dans la revendication 1, avec un composé de formule H-$Q^1$ ou H-$Q^2$, ou en ce que l'on fait réagir un composé de formule générale (20) avec un composé de formule générale (23)

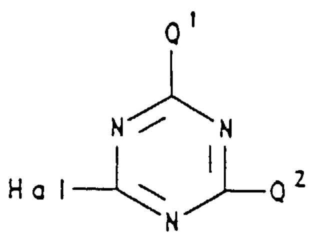

(23)

avec Hal, $Q^1$ et $Q^2$ ayant les significations données ci-dessus.

**14.** Utilisation d'un colorant d'au moins l'une des revendications 1 à 11, ou préparé selon la revendication 12 ou 13 pour la teinture ou l'impression de matières contenant des groupes hydroxyle et/ou carboxamido, plus particulièrement de matières fibreuses.

**15.** Procédé pour la teinture et l'impression de matières contenant des groupes hydroxy et/ou carboxamido, de préférence des matières fibreuses, dans lequel on applique un colorant à la matière et ensuite on fixe le colorant à la matière par la chaleur ou à l'aide d'un agent alcalin ou par la chaleur et à l'aide d'un agent alcalin, caractérisé en ce que le colorant est un colorant d'au moins l'une des revendications 1 à 11 ou préparé selon la revendication 12 ou 13.